(19) Europäisches Patentamt
European Patent Office
Office européen des brevets

(11) EP 4 579 539 A1

(12) EUROPEAN PATENT APPLICATION

(43) Date of publication:
02.07.2025 Bulletin 2025/27

(21) Application number: 23307426.9

(22) Date of filing: 29.12.2023

(51) International Patent Classification (IPC):
G06N 10/40 (2022.01)    G06N 10/60 (2022.01)
G06N 10/20 (2022.01)

(52) Cooperative Patent Classification (CPC):
G06N 10/20; G06N 10/40; G06N 10/60

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Pasqal Netherlands B.V.
1076 ED Amsterdam (NL)

(72) Inventors:
• CHEVALLIER, Claire
  1076 ED AMSTERDAM (NL)
• VOVROSH, Joseph
  1076 ED AMSTERDAM (NL)
• DE HOND, Julius
  1076 ED AMSTERDAM (NL)
• ELFVING, Vincent
  1076 ED AMSTERDAM (NL)

(74) Representative: Slingsby Partners LLP
1 Kingsway
London WC2B 6AN (GB)

(54) **METHOD FOR PREPARING GATES IN AN ANALOG QUANTUM COMPUTER**

(57) A method of determining a pulse sequence to apply an approximation of a local rotation in a first basis of a three-basis coordinate system to a particle of a plurality of particles in a quantum computer, wherein a set of particles having one or more particles of the plurality of particles is associated with a corresponding qubit of a plurality of qubits, the method comprising: identifying a first global rotation in a second basis of the three-basis coordinate system to apply to the plurality of particles, the second basis being different to the first basis; a local rotation in a third basis of the three-basis coordinate system to apply to the particle, the third basis being different from each of the first and second bases; a second global rotation in the second basis to apply to the plurality of particles; whereby the ordered combination of the first global rotation, the local rotation and the second global rotation approximate the local rotation in the first basis.

Fig. 9a

Fig. 9b

Fig. 9c

EP 4 579 539 A1

**Description**

<u>Field</u>

The field of the present disclosure relates to quantum computing, in particular to analog quantum computing. The present disclosure relates more specifically to preparing gates (quantum unitaries) in an analog quantum computer, and in particular to signals used for preparing application-oriented quantum unitaries, such as by variational methods.

<u>Background</u>

Quantum computing is discussed as being a future of computing, in particular for areas such as simulating quantum systems and factoring large numbers. The main goals of quantum computing are usually described to be 'quantum advantage' and 'quantum supremacy'. Quantum advantage is where the speed of the computation is faster for the quantum computing system than the classical computing system. Quantum supremacy is the goal of showing the quantum computing system can solve a problem that is not solvable on a classical computer in a useful time frame.

There are several core principles that differentiate a classical computing system from a quantum computing system. The main principle is that, whilst classical computers utilise classical binary bits '0' and '1', quantum computing systems utilise states represented by a superposition of a plurality of orthogonal (and normalised) states. These orthogonal states are often called basis states. When limited to a two-level quantum system, this state is called a 'qubit.' Such quantum superpositions have no analogue in classical bits. The general pure qubit state $|\psi\rangle$ can be represented by equation 1.

$$|\psi\rangle = \alpha|0\rangle + \beta|1\rangle \qquad \text{Equation 1}$$

Where $\alpha$ and $\beta$ are complex coefficients that are normalised such that $\alpha^2 + \beta^2 = 1$ and 10) and 11) are the basis vectors (basis states) of the qubit. The classical 0 and 1 of conventional computers are special examples of qubits where $\alpha = 1$ and $\beta = 0$ for the measured state '0' and where $\alpha = 0$ and $\beta = 1$ for the measured state '1'. Other qubits whose values of $\alpha$ and $\beta$ are greater than 0 and less than 1 give rise to quantum superposition whereby there is a finite chance to yield either state upon measurement.

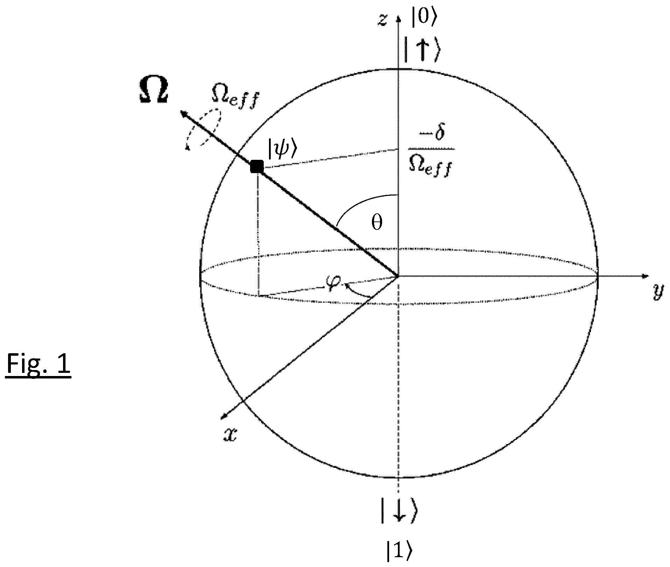

The coefficients $\alpha$ and $\beta$ of the qubit are complex numbers and are more generally represented on the Bloch sphere shown in figure 1, and by equations 2 and 3, where $e^{(i\phi)}$ represents relative phase and $e^{(i\gamma)}$ represents global phase. The classical states 10) and 11) are shown on the Bloch sphere as being the point where the sphere intersects the z-axis. These classical states are alternatively labelled by up and down arrows to accord with an alternative qubit nomenclature. For a pure qubit state $|\psi\rangle$, $\theta$ and $\phi$ are the angles on the Bloch sphere representation wherein $0 \leq \theta \leq \pi$ and $0 \leq \phi \leq 2\pi$. The points on the surface of the Bloch sphere are pure states of the quantum system whilst interior points are mixed states.

$$\alpha = e^{i\gamma}\cos\frac{\theta}{2} \qquad \text{Equation 2}$$

$$\beta = e^{i(\gamma+\phi)}\sin\frac{\theta}{2} \qquad \text{Equation 3}$$

A parametrised form of equation 1 is shown in equation 4. Because the physics of quantum systems representing single qubits only considers relative phase, the coefficient of $|0\rangle$ is real and non-negative so a qubit can be generally represented by equation 4.

$$|\psi\rangle = \cos\frac{\theta}{2}|0\rangle + e^{i(\phi)}\sin\frac{\theta}{2}|1\rangle \qquad \text{Equation 4}$$

Therefore, a qubit state with, for example, a 100% probability of measuring the state of 1 has $\theta = \pi$, hence a coefficient $\beta$ of 1 and a coefficient $\alpha$ of 0. Such a qubit state is equivalent to a classical computing state of 1. However, a qubit state with a 50% chance of being in either basis state 0 or 1, when measured, and assuming no relative phase, may have pre-measurement qubit coefficients defined by $\alpha = \beta = \frac{1}{\sqrt{2}}$, or to put it another way $\alpha^2 = \beta^2 = 1/2$.

In the Bloch sphere representation, a state stays in this superposition until either a measurement is made on the qubit, which collapses the qubit into the classical regime, or an operation is applied to the qubit to change its projection on the Bloch sphere. Until the qubit is measured it exists in all states permitted by the qubit superposition. Indeed, qubits that represent different states in the quantum realm may yield the same physical value when measured. However, when in a superposition state (pre-measurement) the different phases of the qubits may be utilised in the quantum circuit to effect different operations.

Several approaches for realising quantum computation are being investigated in the field, both in terms of the computing technique and the technologies required to implement them. There are a number of different hardware platforms currently being developed to implement quantum computers. Technologies being utilised include ion traps, superconducting qubits, atomic-scale solid-state defects, neutral atoms and photonics.

In classical computers, a bit is physically represented by the voltage across a semiconductor transistor. In quantum computers, qubits are implemented using two level quantum states, which are specific to the exact implementation and physical system being used. Examples of quantum states for fermions are the spin up and spin down of an electron. Other examples of quantum states are the hyperfine states of atomic energy levels.

In addition to several competing hardware platforms, there are also a number of different paradigms for performing the quantum computation itself. These include using quantum gates (in the 'gate model') and cluster (or graph) states (in the measurement-based computing model), as well as others. Some of the most commonly used gates include the Controlled-NOT (CNOT) gate and the Hadamard (H) gate. The CNOT operator operates in an analogous manner to the XOR gate in classical computing. The Hadamard gate applies a rotation to the superposition state on the Bloch sphere and is an important gate because it can transform a deterministic classical state to an equal superposition state.

A sequence of quantum gates, such as the Hadamard and CNOT gates that act upon qubits, is termed a quantum circuit. For quantum computing to work, these gates must be reversible. The gates of a quantum circuit are forms of unitary operators, 'U', often referred to as unitaries. Unitaries, and indeed qubits, are often represented and manipulated in matrix form. A unitary is a unitary matrix, i.e., U multiplied by its conjugate transpose U* is equal to the identity matrix.

One hardware solution to implementing a quantum computer is the neutral atom system. In this system, a plurality of atoms are spatially separated from each other and each held in a different position about a spatial extent, often forming a spatial array. The atoms are close enough to each other such that entanglement operations are possible. Input signals are used to control the quantum state of atoms.

In neutral atom quantum computers, as well as in other quantum computers, the time taken to complete the computation is critical to the success of the computation. This is due to the decoherence of the quantum states over time. The control signals used to control the quantum computers are typically required to have some form of sequence, particularly when used to form quantum gates. The control signals are typically used to drive one or more lasers to output light pulses.

Silvério Henrique et al "Pulser: An open-source package for the design of pulse sequences in programmable neutral-atom arrays", Quantum, 12 Jan 2022, pg 629, (XP055958292) describes an open-source Python library for programming neutral-atom devices at the pulse level.

Summary

In a first aspect there is presented a method of determining a pulse sequence to apply an approximation of a local rotation in a first basis of a three-basis coordinate system to a particle of a plurality of particles in a quantum computer, wherein a set of particles having one or more particles of the plurality of particles is associated with a corresponding qubit of a plurality of qubits, the method comprising:
identifying

a first global rotation in a second basis of the three-basis coordinate system to apply to the plurality of particles, the second basis being different to the first basis;
a local rotation in a third basis of the three-basis coordinate system to apply to the particle, the third basis being different from each of the first and second bases;
a second global rotation in the second basis to apply to the plurality of particles;

whereby the ordered combination of the first global rotation, the local rotation and the second global rotation approximate the local rotation in the first basis.

The local rotation in the first basis suitably corresponds to a single-basis quantum gate. That is, a local Rx rotation suitably corresponds to an X gate. The approach of combining two global rotations and a local rotation enables access to a local rotation even in a basis in which such a local rotation is not directly accessible. This approach enables single-qubit addressability in analog quantum systems.

The phase of the second global rotation may be opposite to the phase of the first global rotation. Providing the second global rotation to be of opposite phase to the first global rotation enables a straightforward implementation of the single-qubit addressability pulse sequence. Such an approach can help ensure experimental feasibility.

The first global rotation may be an R($\pi$/2) rotation, the location rotation in the third basis may be an R($\theta$) rotation and the second global rotation may be an R(-$\pi$/2) rotation. Providing the global rotations to be R($\pm\pi$/2) and the local rotation to be R($\theta$) enables a straightforward implementation of the single-qubit addressability pulse sequence, to effect a phase change of $\theta$ to the qubit in the third basis. Such an approach can help ensure experimental feasibility. Where $\theta = \pi$, the set of three rotations can flip a state $|1\rangle$ to a state $|0\rangle$ and vice versa.

Identifying the local rotation in the third basis may comprise determining a Hamiltonian describing a time evolution of the plurality of particles in dependence on a Rabi frequency, $\Omega$, a detuning frequency, $\delta$, and qubit interactions; setting $\Omega$ to zero to remove the kinetic term of the Hamiltonian; selecting an evolution time to reduce the influence of an interaction term describing the qubit interactions; selecting $\delta(\theta)$ to tune the Hamiltonian to act as a local rotation in the third basis with an angle of $\theta$.

fl may be effectively set to zero by turning off the control field laser or blocking the beam, where a laser is used to affect energy levels of particles of the plurality of particles. Selecting the evolution time in this way provides a way to effectively reduce or even remove the influence of the interaction term. Reducing the Hamiltonian to comprise just the detuning term (or to substantially only comprise the detuning term if a negligible contribution from the interaction term remains) enables single-qubit addressability in the analog quantum computer system.

Determining the Hamiltonian may comprise determining the interaction term to be

$$J \sum_i \hat{n}_i \, \hat{n}_{i+1}$$

where $J = \frac{C_6}{r^6}$, with $C_6$ being a constant defined by the Rydberg state and $r$ a qubit separation, and the evolution time, $t$, is selected as $t = 2\pi/J$.

Selecting $\delta(\theta)$ may comprise selecting $\delta_i = \frac{\theta_i}{t}$, whereby the Hamiltonian can be tuned to act as a local gate in the third basis, with an angle of $\theta_i$. This approach enables access to local gates in one of the bases, for example in the $Z$ basis, i.e. an Rz gate, with controllable angles.

Identifying the local rotation in the third basis may comprise determining a local rotation pulse length to maximise a fidelity of the local rotation in the third basis, comprising modelling nearest-neighbour interactions between qubits; and varying the determined local rotation pulse length to increase the fidelity of the local rotation in the third basis. Varying the determined local rotation pulse length in this way enables the use of a simple model to initially determine the local rotation pulse length, at lower computational complexity and/or time than performing a more complex model (for example a model taking full account of interactions that are not limited to nearest-neighbour interactions), whilst being able to increase fidelity when non-nearest-neighbour interactions are also taken into account. Varying the determined local rotation pulse length may comprise reducing the determined local rotation pulse length. Varying the determined local rotation pulse length may comprise reducing the determined local rotation pulse length by $\leq$ 10 ns. Varying the determined local rotation pulse length may comprise reducing the determined local rotation pulse length by $\leq$ 5 ns, for example by 5 ns. Varying the determined local rotation pulse length may comprise reducing the determined local rotation pulse length by $\leq$ 3 ns.

Identifying one or both of the first and second global rotations may comprise determining a global rotation pulse length to maximise a fidelity of the first global rotation and/or the second global rotation, comprising modelling nearest-neighbour interactions between qubits; and varying the determined global rotation pulse length to increase the fidelity of the first global rotation and/or the second global rotation. Varying the determined global rotation pulse length in this way enables the use of a simple model to initially determine the global rotation pulse length, at lower computational complexity and/or time than performing a more complex model (for example a model taking full account of interactions that are not limited to nearest-neighbour interactions), whilst being able to increase fidelity when non-nearest-neighbour interactions are also taken into account. Varying the determined global rotation pulse length may comprise increasing the determined global rotation pulse length. Varying the determined global rotation pulse length may comprise increasing the determined global rotation pulse length by $\leq$ 10 ns. Varying the determined global rotation pulse length may comprise increasing the determined global rotation pulse length by $\leq$ 5 ns. Varying the determined global rotation pulse length may comprise increasing the determined global rotation pulse length by $\leq$ 3 ns. Varying the determined global rotation pulse length may comprise increasing the determined global rotation pulse length by approximately 1.5 ns.

In another aspect there is presented a method of determining a pulse sequence to apply an approximation of a global rotation to a plurality of particles in an analog quantum computer, wherein a set of particles having one or more particles of the plurality of particles is associated with a corresponding qubit of a plurality of qubits, the pulse sequence being characterised by a parameter, the method comprising:

(i) in an initial stage:

determining an initial value for the parameter over an initial time period of the pulse sequence;
the initial value being determined by an optimisation process carried out on the pulse sequence over the initial time period.

The optimisation process may comprise performing an annealing process to find a global minimum of a function. The function may be based on the pulse sequence. This approach allows a global minimum to be found in an efficient manner.

The method may comprise:

A) (ii) in a first stage subsequent to the initial stage:

dividing the initial time period of the initial stage into a plurality of first stage time periods, and for each first stage time period of the plurality of first stage time periods:

assigning the initial value for the parameter to be a first value for the parameter for that first stage time period, and
varying the first value for the parameter to determine a varied value for the parameter for that first stage time period, thereby to optimise the parameter over that first stage time period,

wherein the respective first values for the parameter in each of the first stage time periods are allowed to vary independently; or

B) (ii) in a first stage subsequent to the initial stage:

multiplying the initial time period of the initial stage by a positive factor > 1 to generate a new time period for the pulse sequence longer than the initial time period of the pulse sequence;
dividing the new time period into a plurality of time period sections, and for each time period section of the plurality of time period sections:

assigning the initial value for the parameter to be a first value for the parameter for that time period section, and
varying the first value for the parameter to determine a varied value for the parameter for that time period section, thereby to optimise the parameter over that time period section,

wherein the respective first values for the parameter in each of the time period sections are allowed to vary independently.

This variational method enables the parameter to be optimised quickly and efficiently. The parameter may comprise one or more of a global Rabi frequency, fl, a global phase and a global detuning frequency, $\delta$, of the pulse sequence. Each of the first stage time periods may be of equal length. Each of the time period sections may be of equal length. This can help simplify the variational method. The initial time period may be divided into two time periods. Each time period section in the first stage may be the same length as the initial time period. This can help simplify the variational method.

The initial value for the parameter may be a value within a range of possible initial values. The initial value may be determined by an optimisation process over the initial time period.

Optimising the parameter may comprise determining a function characterising the pulse sequence and determining a turning point in the behaviour of that function, the optimised value for the parameter being the value of the parameter at which the function has a gradient of zero. Optimising the parameter may comprise determining a function characterising the pulse sequence and determining a maximum or minimum of that function in a range of function values, the optimised value for the parameter being the value of the parameter at which the function has the maximum or minimum. The function may comprise a loss function. Optimising the parameter may comprise determining the value for the parameter at which the loss function is minimised.

Where the method comprises dividing the initial time period of the initial stage into a plurality of first stage time periods, the method may further comprise:
(iii) in a succeeding stage:

dividing at least one time period of the preceding stage into a plurality of new time periods, and for each new time period of the plurality of new time periods:

assigning the varied value for the parameter in the at least one time period of the preceding stage to be a new value for the parameter for that new time period, and

varying the new value for the parameter to determine a new varied value for the parameter for that new time period, thereby to optimise the parameter over that new time period,

wherein the respective new values for the parameter in each of the new time periods are allowed to vary independently;

wherein step (iii) is performed $k$ times, where $k \geq 1$.

Each of the new time periods may be of equal length. This can help simplify the variational method.

The at least one time period of the preceding stage may be divided into two time periods. This can help simplify the variational method. All of the time periods of the preceding stage may be divided. This can allow the variational method to more quickly reach an optimised value for the parameter over the initial time period.

Performing step (iii) $k$ times can enable an iterative refinement of the parameter value. The variational method may be performed iteratively until the loss function is less than a loss threshold. The variational method may be performed iteratively whilst the smallest new time period remains greater than or equal to a minimum time period.

Where the method comprises multiplying the initial time period of the initial stage by a positive factor to generate a new time period for the pulse sequence longer than the initial time period of the pulse sequence, the method may further comprise:

(iii) in a succeeding stage:

multiplying at least one time period section of the preceding stage by a positive factor > 1 to generate a further time period longer than the new time period;

dividing the further time period into a plurality of further time period sections, and for each further time period section of the plurality of further time period sections:

assigning the varied value for the parameter in the at least one time period section to be a new value for the parameter for further time period section, and

varying the new value for the parameter to determine a new varied value for the parameter for that further time period section, thereby to optimise the parameter over that further time period section,

wherein the respective new values for the parameter in each of the further time period sections are allowed to vary independently.

Each of the further time period sections may be of equal length. This can help simplify the variational method. The at least one time period section of the preceding stage may be multiplied by the positive factor. The positive factor may be a positive integer greater than 1, e.g. 2 or 3. This can help simplify the variational method. All of the time period sections may be multiplied by the positive factor. This can allow the variational method to more quickly reach an optimised value for the parameter over the length of the pulse sequence.

The method may comprise smoothing the determined pulse sequence. Smoothing the determined pulse sequence may comprise one or more of interpolating between points, extrapolating from points, applying a spline curve and applying a Bézier curve. Smoothing the determined pulse sequence enables the determination of a more experimentally feasible pulse sequence. The method may comprise using the determined pulse sequence in a state preparation process for a register of an analog quantum computer.

In another aspect there is presented a method of determining a pulse sequence to apply a quantum processing operation to a particle of a plurality of particles in a quantum computer, wherein a set of particles having one or more particles of the plurality of particles is associated with a corresponding qubit of a plurality of qubits, the method comprising:

determining an approximation of a local rotation as described herein;
determining an approximation of a global rotation as described herein;
determining an approximation of one or more $CZ$ gates to the plurality of particles, comprising:

determining a sequence of $CZ$ gates in an analog pulse sequence;
determining an unwanted $CZ$ gate to remove from the sequence of $CZ$ gates;

removing the unwanted *CZ* gate by applying a refocussing algorithm; and
determining the pulse sequence to apply a quantum processing operation by combining at least one of each of the determined local rotation, the determined global rotation and the determined one or more *CZ* gates.

The refocussing algorithm may comprise applying to the plurality of particles a first pulse, the first pulse comprising a first term characterising an unwanted interaction between qubits; and applying to the plurality of particles a second pulse, the second pulse being of the same length as the first pulse and comprising a second term characterising the unwanted interaction between qubits, the second term being of opposite sign to the first term.
Removing the unwanted *CZ* gate may comprise determining a pulse in the pulse sequence relating to an interaction between a first qubit and a second qubit that corresponds to the unwanted *CZ* gate, and surrounding the determined pulse by one of *X* gates or *Y* gates acting on one of the first qubit and the second qubit.
The method may comprise using single-qubit detuning to compensate for linear terms introduced by applying the one of *X* gates or *Y* gates. The particles are suitably matter particles, for example neutral atoms. The quantum computer may comprise a neutral atom quantum computer.
In another aspect there is presented a method of determining a pulse sequence to apply an approximation of a network exhibiting all-to-all connectivity to a plurality of particles in an analog quantum computer, wherein a set of particles having one or more particles of the plurality of particles is associated with a corresponding qubit of a plurality of qubits, the method comprising:

determining one or more single-qubit gates approximated in an analog system;
determining one or more *CZ* gates approximated in an analog system; and
determining the pulse sequence to apply an approximation of the network by combining the one or more single-qubit gates and the one or more *CZ* gates.

Providing a network exhibiting all-to-all connectivity, such as a SWAP network or a Givens SWAP network, in an analog device may enable the amelioration of limited connectivity that can affect analog quantum devices.
The network may comprise a SWAP network. Determining the pulse sequence to apply an approximation of the SWAP network may comprise determining three CNOT gates to form each SWAP gate of the SWAP network. A CNOT gate may be expressable as

$$\mathrm{CNOT(i, j)} = \mathrm{Ru}\left(\frac{\pi}{2}\right) CZ(\mathrm{i, j}) \mathrm{Ru}\left(-\frac{\pi}{2}\right)$$

where Ru indicates Rx or Ry. The network may comprise a Givens SWAP network comprising a plurality of Givens SWAP gates. The use of Givens SWAP gates is useful because these can provide an effective ansatz for variational quantum eigensolver problems. A Givens SWAP gate of the plurality of Givens SWAP gates may be expressable as a plurality of *CZ* gates and a plurality of single-qubit rotations.
For two qubits, q0 and q1, the Givens SWAP gate may be expressable as

a) $\mathrm{Ru}\left(\frac{\pi}{2}\right)$ on q0
b) CZ(0,1)

c) $\mathrm{Ru}\left(-\frac{\pi}{2}\right)$ on q0, and $\mathrm{Ru}\left(\frac{\pi}{2} + \theta\right)$ on q1
d) CZ(0,1)

e) Ru(2) on q0, and $\mathrm{Ru}\left(-\frac{\pi}{2} - \theta\right)$ on q1
f) CZ(0,1)

g) $\mathrm{Ru}\left(-\frac{\pi}{2}\right)$ on q0

where Ru indicates Rx or Ry.
In another aspect there is presented a method of applying a variational quantum eigensolver (VQE), using a pulse sequence to apply an approximation of the network determined as described herein. The VQE may be applied to find the ground state of a molecule. Finding the ground state of a molecule may comprise finding the state $|\psi\rangle$ such that the energy

$$E = \frac{\langle\psi|\mathrm{H}|\psi\rangle}{|\langle\psi|\psi\rangle|}$$ is minimal. For a variational state $|\psi_\theta\rangle$, where for any $\theta$, we have $$E_\theta = \frac{\langle\psi(\theta)|H|\psi(\theta)\rangle}{|\langle\psi(\theta)|\psi(\theta)\rangle|} \geq E_0$$, where $E_0$ is the ground state energy, the VQE algorithm may comprise:

1. choosing a variational circuit $|\psi_\theta\rangle$
2. choosing an initialisation for $\theta$
3. measuring the value of the energy on a quantum computer (each Hamiltonian may be decomposed into a sum of Pauli operators, and each term may be measured on a quantum computer)
4. giving the value of the energy to a classical optimizer, which will give a new $\theta$
5. start again from point 3 until convergence of the optimization procedure.

The method may comprise applying a paired-electron approximation to the VQE to halve a number of qubits required. The method may comprise changing basis between one or more of $X$, $Y$ and $Z$, thereby enabling measurement of one or more of $\langle\sigma^x\sigma^x\rangle$, $\langle\sigma^x\rangle$, $\langle\sigma^y\sigma^y\rangle$, $\langle\sigma^y\rangle$, $\langle\sigma^z\sigma^z\rangle$ and $\langle\sigma^z\rangle$. Changing basis to enable such measurements permits access to a greater number of measurables than was previously accessible. For example, the ability to measure $\langle\sigma^x\sigma^x\rangle$, $\langle\sigma^x\rangle$, $\langle\sigma^y\sigma^y\rangle$ and $\langle\sigma^y\rangle$ permits measurement of the energy of a system.

The method may comprise changing the basis by applying a global $(\pi/2)$ rotation. The global $(\pi/2)$ rotation may be determined according to the variational techniques discussed herein.

The number of layers of SWAP gates or Givens SWAP gates used to determine the result of the VQE may be equal to or greater than the number of qubits. The number of layers of SWAP gates or Givens SWAP gates used to determine the result of the VQE may be dependent on the fidelity with which the gate approximations are determined. The lower the fidelity with which the gate approximations are determined, the greater the number of layers of SWAP gates or Givens SWAP gates that may be used. The method may comprise varying the number of layers of SWAP gates or Givens SWAP gates as a function of the number of paired electrons.

There is also presented a non-transitory computer readable medium comprising instructions for executing any one or more of the methods described herein. Any one or more of the methods described herein may be a computer-implemented method. In this respect, computer-implemented is intended to mean implemented by a classical computer.

There is also presented a system comprising an electronic computer comprising:

I) a processor;
II) memory comprising instructions for executing any one or more of the methods described herein.

Brief description of the figures

Embodiments of the present invention will now be described by way of example only, with reference to the accompanying drawings, in which:

Figure 1 shows the Bloch sphere;
Figure 2a shows a schematic depicting a setup for a neutral atom quantum computer;
Figure 2b shows an example of a setup for a neutral atom quantum computer;
Figures 3a-3c show examples of atomic system energy level transitions;
Figures 4a and 4b show an example of the Rydberg blockade;
Figure 5 shows a schematic example of a CNOT gate;
Figures 6a-6d show examples of energy level transitions of a CZ gate;
Figures 7a-7c show example rotations;
Figure 8a shows a schematic of combining global pulses with local Z gates to perform local X or Y gates;
Figure 8b illustrates example pulse sequences to implement global rotations;
Figures 9a-9c show a variational method for optimising a pulse sequence;
Figure 10a shows a schematic of a pulse sequence to perform a $CZ(0, 1)CZ(2, 3)$ gate on a four-qubit nearest-neighbour linear chain with periodic boundary conditions;
Figure 10b shows a schematic of a pulse sequence to perform a $CZ(0, 1)CZ(1, 2)$ gate on a four-qubit nearest-neighbour linear chain with periodic boundary conditions;
Figure 10c shows a schematic of a pulse sequence to perform a $CZ(0, 1)$ gate on a four-qubit nearest-neighbour linear chain with open boundary conditions;
Figure 10d shows a schematic of a pulse sequence to perform a $CZ(1, 2)$ gate on a four-qubit nearest-neighbour linear chain with open boundary conditions;

Figure 11a shows the equivalence between a SWAP gate and three CNOT gates;
Figure 11b schematically shows how a Givens SWAP network can be decomposed into three CZ gates and layers of single-qubit gates;
Figure 12a shows analog VQE results for the $H_2$ molecule;
Figure 12b shows analog VQE results for the LiH molecule;
Figure 13a shows a plot of fidelity against pulse length with the number of qubits for analog Rz;
Figure 13b shows resultant local magnetisations of each qubit in an 18-qubit system after the analog pulses for a global $RY\left(\frac{\pi}{2}\right)$ rotation;
Figure 13c shows a plot of fidelity against pulse length with the number of qubits for a global rotation gate;
Figure 13d shows resultant local magnetisations of each qubit in an 18-qubit system after the analog pulses for a local $X_8$ gate; and
Figure 14 shows resultant local magnetisations of each qubit in an 18-qubit system after the analog pulses for a local $X_1$ gate.

## Detailed description

There is presented a method for preparing quantum unitaries in an analog quantum computer, for example a neutral atom quantum computer. Gates of a quantum circuit are forms of unitary operators, often referred to as unitaries. Thus, the method relates to methods for preparing gates in an analog quantum computer. In the following description, reference is made to 'quantum computing' and 'quantum computer(s)'. This form of computing is taken to be different to standard electronic computing or computers, which may be referred to as 'classical' computers. Examples of classical computing hardware and software that can be used with the method are provided elsewhere herein.

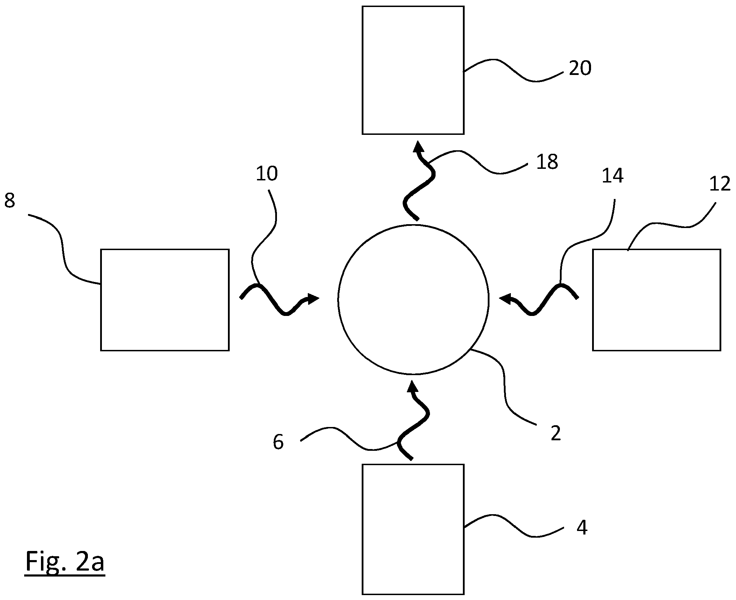

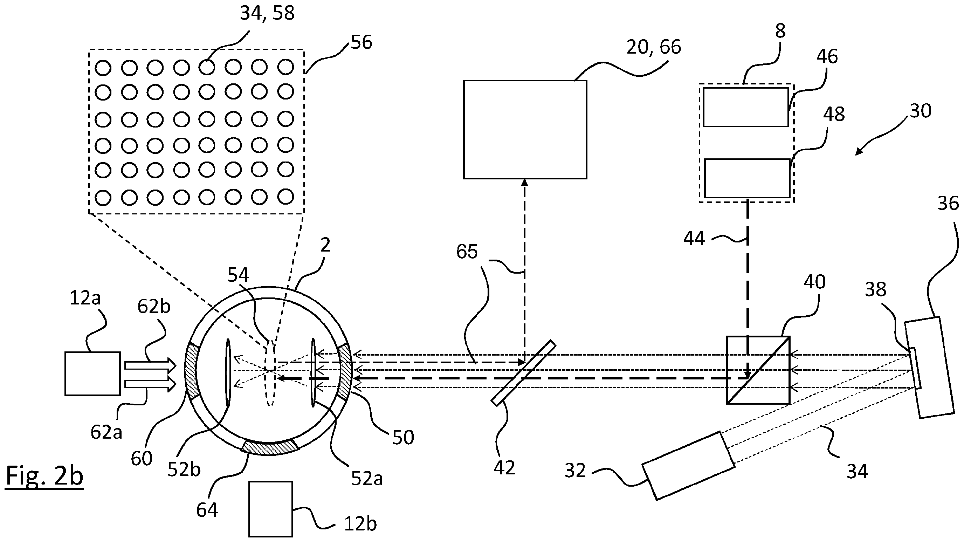

The method may be enacted by an apparatus, a system of components, a device or a plurality of devices. Figure 2a shows a general schematic of a setup for a neutral atom quantum computer. The setup may be referred to as a 'quantum computing system'. Figure 2b shows a further, more detailed, example of such a setup.

## General example of a neutral atom quantum computer system setup

As a schematic, the positions and configurations of the elements in figure 2a are not supposed to imply any real-world size, positioning or configuration of features, but merely to illustrate an example of the key functioning components of a neutral atom quantum computing system that can be used with the methods discussed herein.

As illustrated in figure 2a, the setup for a neutral atom quantum computer comprises a chamber 2, a holding apparatus 4, an atom positioner 8, an atomic state actuator 12 and a detector 20. The chamber 2 is configured to accommodate a plurality of atoms. The atoms are of the same element. The atoms are, from a chemical standpoint, identical when no external interactions are imposed upon them. The atoms are unbound to other atoms in the group, for example, by being in a gaseous matter state. Atoms used in the chamber 2, for trapping, positioning and atomic-state-manipulating may be any suitable atom, for example, but not limited to, any of Rubidium, Caesium, Strontium and Ytterbium. Other examples of particular elements or element groups are discussed elsewhere herein. Preferably the atoms used are those having one or two valence electrons such as alkali metals and alkali earth metals. Other atoms may be used, such as rare earth elements.

The holding apparatus 4 is configured to hold a group of the atoms. The holding apparatus 4 acts to isolate each individual atom such that each atom, in the group, is held in a different point in space (to the other atoms of the group) within the chamber 2. The term 'isolate' in this context means that the atoms are physically held away from each other, in space, and nominally do not interact (when in a non-excited atomic state) with adjacently held atoms of the same group. If the atoms are acted upon by an input stimulus such as, for example, an electromagnetic signal of one or more photons, held atoms may interact with other held atoms using particular physical effects such as, but not limited to the Rydberg blockade. There may be a pattern of spatially separated traps. The pattern may be an array of regular or irregular spaced traps. The pattern may be 1D. The pattern may be 2D. For example, the traps in the pattern may all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the spacing in other spatial dimensions.

The holding apparatus 4 may be configured to maintain the atoms in their respective stationary positions using different mechanisms including, but not limited to, magnetics traps and optical traps. The holding apparatus 4 may provide a plurality of trap sites wherein, when first activated to output the traps, some trap sites are filled by one or more atoms whilst other trap sites are vacant. Preferably the holding apparatus 4 is configured to present trap sites that hold only one atom. Referring to figure 2a, the holding apparatus 4 suitably uses one or more electromagnetic signals, such as optical signals 6, that are input into the chamber 2 to affect the optical traps. The holding apparatus can be configured to generate the one or more electromagnetic signals, such as optical signals 6. The one or more electromagnetic signals may be of any suitable wavelength, including but not limited to 800-1500nm, more preferably 820 - 880nm. Figure 2a shows the holding apparatus 4 being external to the chamber 2. However, the holding apparatus 4 may form part of the chamber 2 or be inside the chamber 2. Portions of the holding apparatus 4 can be distributed between locations including two or more of locations external to the chamber, locations forming part of the chamber or locations inside the chamber. Although only a single holding apparatus 4 is shown in figure 2a, it is envisaged that more than one holding apparatus 4 may be provided.

The atom positioner 8 is configured to controllably move one or more held atoms from one spatial position to another spatial position. For example, the atom positioner 8 may be configured to move an atom trapped in one of the optical trap sites to another different trap site. Figure 2a shows the atom positioner 8 being external to the chamber 2. The atom positioner 8 may form part of the chamber 2. The atom positioner 8 may be inside the chamber 2. Portions of the atom positioner 8 can be distributed between locations including two or more of locations external to the chamber, locations forming part of the chamber or locations inside the chamber.

The atom positioner 8 and holding apparatus 4 may be part of the same device or system for holding and moving the atoms. The atom positioner 8 may be configured to use different technologies to manipulate the position of the atoms including, but not limited to, moving the atoms using magnetic signals or electromagnetic signals such as optical signals. The electromagnetic signals may be of any suitable wavelength, including but not limited to 800-1500nm, more preferably 820 - 880nm. Referring to figure 2a, optical signals 10 are used such as, but not limited to optical tweezers. Suitably the atom positioner 8 is configured to generate the optical signals 10. Although only a single atom positioner 8 is shown in figure 2a, it is envisaged that more than one atom positioner 8 may be provided.

The atomic state actuator 12 is configured to output one or more signals to control and manipulate the atomic states of one or more of the atoms in the chamber 2, preferably the trapped atoms. E.g. the atomic state actuator 12 is configured to actuate the transition between atomic states. The signals output by the atomic state actuator 12 suitably comprise electromagnetic signals 14 of one or more photons. Different signals may be output by the atomic state actuator 12 including signals at different wavelengths. Each wavelength may correspond to (i.e. be resonant with) a different atomic transition. Although only a single atomic state actuator 12 is shown in figure 2a, it is envisaged that more than one atomic state actuator 12 may be provided. For example, a first atomic state actuator 12 may be configured to output a different wavelength or set of wavelengths than a second atomic state actuator 12. The atomic state actuator may facilitate the transition between atomic states of a single trapped atom or a plurality of trapped atoms. For example, two or more, three or more, trapped atoms, or all of the trapped atoms. Figure 2a shows the atomic state actuator 12 being external to the chamber 2. However, the atomic state actuator 12 may form part of the chamber 2. The atomic state actuator 12 may be inside the chamber 2. Portions of the atomic state actuator 12 can be distributed between locations including two or more of locations external to the chamber, locations forming part of the chamber or locations inside the chamber.

The electromagnetic wavelength for transitioning a rubidium atom to the Rydberg state may be 297nm. The electromagnetic wavelength for transitioning a Caesium atom to the Rydberg state may be 318.6nm. The electromagnetic frequency for transitioning a rubidium atom between hyperfine states may be 6.835 GHz. The electromagnetic frequency for transitioning a Caesium atom between hyperfine states may be 9.192 GHz. The excitation from the ground state to the Rydberg state may be facilitated by two-photon absorption. This may be accomplished using two different electromagnetic (EM) sources such as lasers or other EM sources. These two EM sources may have different wavelengths.

Preferably any electromagnetic signals used to trap and move the atoms are preferably different, at least in wavelength, to the optical signals used to manipulate the quantum states of the atoms. In particular, any electromagnetic signals for trapping and moving the atoms are preferably off-resonance, i.e. the wavelength of the holding and positioning electromagnetic signals do not act to excite the atom between different atomic states.

The detector 20 is configured to monitor electromagnetic signals 18 output from the atoms in the chamber 2. The detector may comprise a camera. The camera may be configured to image the fluorescence output by the atoms held by the holding apparatus 4. Figure 2a shows the detector 20 being external to the chamber 2. However, the detector 20 may form part of the chamber 2. The detector 20 may be inside the chamber 2. Portions of the detector 20 can be distributed between locations including two or more of locations external to the chamber, locations forming part of the chamber or locations inside the chamber.

An example of the general operation of the neutral atom quantum computing system may be as follows. Any of the following steps may be omitted, combined, rearranged in order, or adapted using features from other examples herein. Furthermore, other steps may be included before, at the same time, or after any of the steps listed below.

A) The holding apparatus 4 emits signals into the chamber 2 to create a plurality of optical traps.
B) Some of the ensemble of atoms in the chamber 2 are automatically trapped by the plurality of traps.
C) The atom positioner 8 is optionally used to move some, or all, of the trapped atoms between traps so that at least a particular set of the traps are each filled by an atom. This set of traps may be referred to as a 'register'. The detector 20 may be used in this process to help identify which traps are occupied or vacant. In some examples the atom positioner may not be required.

D) The atomic state actuator 12 outputs one or more electromagnetic signals 14 to control atomic state transitions of at least one of the atoms. This step may be performed a plurality of times to implement processing operations of the quantum computer, for example, time-sequentially inputting a plurality of electromagnetic signals to implement quantum logic gate operations.

E) The detector 20 is used to determine the atomic states of the atoms, e.g. after the signals in step D) have been performed.

The quantum system may be re-set at least by removing the traps. The quantum system may, for example after being re-set, be re-initialised for a further quantum computation by repeating steps A)-E) above for a further time period.

Any features described with respect to the general example of a neutral atom quantum computer setup as illustrated in figure 2a, including but not limited to any one or more of the atoms used; the atomic state actuator 12; the atom positioner 8; the holding apparatus 4; the detector 20, and the general operation, may be used with any other example presented herein.

Detailed example of a neutral atom quantum computer system setup

Figure 2b shows a specific example of a neutral atom quantum computing/system setup 30. The chamber 2 comprises a vacuum chamber. A dilute atomic vapour is formed inside the chamber 2. Suitably, the chamber 2 comprises an ultra-high vacuum system operating at room temperature. Other environmental temperatures may be formed inside the chamber 2. Figure 2b is a more detailed example of figure 2a wherein like references in the figures represent like components. This setup may be adapted according to any teaching herein including, but not limited to, the features described in respect of figure 2a. The setup illustrated in figure 2b may be referred to as a 'quantum processor' or 'quantum system'. It is to be understood that the example illustrated in figure 2b is just one example of a setup for a quantum processor and provides a 2D array of optical trapping sites. Other setups may be provided, for example to implement a 3D array of trapping sites, by including a plurality of the components described herein and/or by providing one or more components at different component locations and/or with different configurations. The example illustrated in figure 2b may be adapted by removing components, adding components, combining components and repositioning components.

In the example illustrated in figure 2b, a laser system 32, comprising a laser and beam-expanding optics, outputs a cross-sectionally-wide collimated laser beam 34 towards a spatial light modulator (SLM) 36. The SLM 36 and the laser system 32 can be considered as being equivalent to the holding apparatus 4 in figure 2a. The SLM 36 comprises a 2D periodic array of controllable deformable mirrors 38 which receive the collimated beam 34 and selectively reflect portions of the beam 34 towards a polarising beam splitter (PBS) 40. The SLM 36 outputs an adjustable phase pattern on the light 34, that in turn gets converted into an intensity pattern 58 by first lens 52a, as described elsewhere herein. The polarisation of the reflected portions of the beam 34 pass through the PBS 40 and propagate towards a dichroic mirror 42. It is understood that the laser system may have other components such as a polarisation rotator (not shown) for controllably adjusting the polarisation of output light 34 incident upon the SLM 36, so that the polarisation of light 34 is aligned to the transmission axis of the PBS 40.

The PBS 40 also receives electromagnetic signals 44 from an atom positioner 8. The atom positioner 8 comprises a laser 46 and a 2D acousto-optic laser beam deflector 48. The 2D acousto-optic laser beam deflector 48 receives laser light from the laser 46 and controls the direction of the laser light into the PBS 40. In turn, this allows the deflector 48 to use the laser light 44 as an optical tweezer or an array of optical tweezers. The light 44 output from the atom positioner 8 is reflected by the PBS 40 such that it is output from the PBS 40 along a substantially similar path to the light 34 output from the PBS 40 that originates from the laser system 32. The light beams 34 and 44 may at least partially overlap in space when output from the PBS 40. The light 44 originating from positioner 8 that is reflected and output by the PBS 40 is incident upon the dichroic mirror 42.

It is noted that the position and direction of light rays in figure 2b, such as beams 34 and 44, are shown spatially separate to each other, however this is merely for purposes of visual clarity in the figure and may not represent the beam positions in practice.

Both the light 34 and 44 output from the PBS pass through the dichroic mirror 42 and are incident upon a window 50 of the chamber 2. The window 50 may be one of a plurality of windows in the chamber that are at least partially transparent to the wavelengths of the light that are incident upon them that are generated by the electromagnetic sources of the system 30. The window 50 forms part of the body of the chamber 2 and is sealed with respect to the walls of the chamber such that the chamber 2 holds a vacuum environment within it. Other components may be associated with the vacuum chamber 2 by either being inside the chamber 2, integrated with the chamber 2 or immediately surrounding the chamber 2. Components may be considered to be associated with the chamber 2 by being configured to input stimuli into the chamber 2, such as electromagnetic fields or magnetic fields. One or more magnetic coils (not shown) may be included about the chamber 2 to provide a spatially-varying magnetic field that, with the laser light 34, acts to provide a magneto-optical trap (MOT). The laser light 34 may have a wavelength configured to cool the atoms via the mechanism of doppler cooling. The light 34 may be split and/or reflected by other optical components (not shown) to provide a plurality of beams propagating along different directions that intersect a trapping area 54. Such beams may be used to provide cooling in a plurality of directions such as along one or more of X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 34, the magneto-optical trap.

The quantum system 30 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

The quantum system 30 comprises a pair of convex lenses 52a, 52b located inside the chamber 2. A first lens 52a is positioned to receive light beams 34, 44 passing through the window 50. The first lens 52a is configured to focus the light beams 34, 44 onto the trapping area 54. The trapping area 54 is an area of minimum beam waist (i.e., at the focal plane of the first lens 52a). A second lens 52b is located on the opposite side of the focal plane from the first lens 52a. The second lens 52b is configured to capture light exiting the trapping area 54 and to focus or collimate the light into a plurality of light beams that may be incident upon: a beam dump inside the chamber 2 (not shown) or another chamber window 60 that allows the light to escape the chamber 2.

An expanded view 56 of the focal plane in area 54 is also shown in figure 2b. An array of optical trapping sites 58 is shown that are created from the mirrors 38 of the SLM 36 reflecting portions of the light 34.

The quantum system 30 comprises two atomic state actuators 12a, 12b, as illustrated in figure 2b. The atomic state actuators comprise or take the form of lasers that output light for manipulating the states of the atoms trapped at the trapping sites 58. In figure 2b, atomic state actuator 12a is a system comprising two lasers. Each of these two lasers is configured to output light 62a, 62b at a different wavelength from the other of the two lasers. The different wavelengths of this light 62a, 62b match different atomic transitions of the atomic system (or 'ensemble') held in the chamber 2.

The light from the actuator 12a is incident upon a chamber window 60, through which the light travels and is incident upon the second lens 52b. The second lens 52b, in turn, focusses the light onto the atoms in the trapping sites 58. A further atomic state actuator 12b is shown in figure 2b as being positioned, about the plan view of the chamber 2, orthogonally to the first actuator 12a. This second actuator 12b may be substantially similar to the first actuator 12a. A further chamber window 64 allows light output from the second actuator 12b into the chamber 2. The second actuator 12b may be used to help address and manipulate atoms, particularly when the system provides a 3D array of optical traps. The optics for focussing light inside the chamber 2 from the second actuator are not shown in figure 2b.

It is to be understood that figure 2b and its accompanying description is an example of a setup for a neutral atom quantum computer. The atomic state actuators 12a, 12b may be positioned in different locations, including inside or outside the chamber 2 or part of the chamber 2. There may be one or a plurality of different atomic state actuators 12a, 12b. The atomic state actuators 12 may be integrated or otherwise co-located with other electromagnetic sources such as the laser 46 or laser system 32. It is also to be understood that the quantum system 30 may include other optical or electronic components and/or configurations to allow the neutral atoms to be addressed by the different electromagnetic sources.

An EM source may be configured to act on one or more qubits concurrently. An EM source may be configured to output one or more EM signals simultaneously. EM signals may be pulses of EM radiation of different durations, wherein during that duration the EM signal may have different amplitude profiles over time. An EM source may be configured to act on one or more qubits at the same time by emitting one or more EM signals in response to one or more control signals. An EM source may be configured to apply pulses to one or more qubits concurrently.

For example, the laser system 32 may emit a laser beam 34 which may comprise sequential EM pulses. The path length of the laser beam 34 may vary. The EM pulses may travel different distances, so that the pulses may act on more than one qubit simultaneously. The quantum system 30 may have components for delaying an EM pulse. In another example, the focal spot size of the laser beam 34 may be large enough to encompass the area in which two or more qubits are positioned. The laser beam 34 may act on two or more qubits.

Light, for example fluorescence, emitted by the trapped atoms may be output from the chamber 2 through any of the windows 50, 60, 64. In figure 2b, the light 65 emitted from the trapped atoms travelling out of the window 50 is, prior to exiting window 50, collimated by the first lens 52a. This light 65 is incident upon the dichroic mirror 42. The dichroic mirror 42 reflects the emitted light 65 towards a detector 20. In the illustrated example, the detector comprises a camera 66. The camera 66 may comprise an electron-multiplying charge-coupled-device (EMCCD) camera. The dichroic mirror may have an edge or pass-band characteristic filter response that substantially reflects emitted light 65 but substantially transmits light 34, 44.

Figure 2b illustrates the quantum system 30 as comprising a collection, or system, of separate components, including bulk-optic devices wherein light is propagated between components using free-space propagation. It should be appreciated that other versions or setups of the quantum system 30 may be implemented using fibre-optics or integrated optic components, or a mixture of components described herein.

One or more of the components of the quantum system 30, such as, but not limited to, one or more of the laser system 32, the atom positioner 8, the camera 66, and the atomic state actuators 12a, 12b may be controlled by a classical computer system running one or more pieces of software and/or providing manual user input through an interface to control these one or more components. Details of classical computer system features are provided elsewhere herein.

Example of operating the quantum processor

There now follows an example of operating a quantum processor such as, but not limited to, the setup as shown in figure 2b. The atoms in this example are rubidium atoms. However other atoms may be used.

The atoms in the chamber 2 are initially not in an arrangement suitable for performing quantum computing operations. To get the atoms in an arrangement for quantum processing, a 3D MOT is initiated, as described herein, wherein a cold ensemble of approximately $10^6$ atoms with a $1mm^3$ volume is prepared inside the trapping area 54. This array of atoms may be referred to as a 'register.' Locating atoms in the trapping sites may be referred to as 'register loading'. The optical tweezers using light 44 isolate individual atoms in the ensemble. The trapping volume of a tweezer may be between $1\text{-}10\mu m^3$ or generally in the order of a few $\mu m^3$. Such a volume may trap at most one atom at a time. The number and arrangement of tweezers may be in any 1D, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018", the entire contents of which are included herein by reference.

When first initiated, the trapping sites of the register may each hold an atom. In practice the sites are not all likely to initially be occupied. For example, only 50% may be occupied. This occupation may be in a non-ordered or random manner. As such a sub-register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub-register holds a single atom. Hence each site has unit filling. This may be referred to as being a defect-free sub-register wherein a defect is a site in the sub-register that is intended to be filled but is not, or conversely, a site that is intended to be unfilled but is filled. Other sub-register atom arrangements are possible.

To determine where the atoms are initially held in the register, the atoms are imaged by collecting their fluorescence on the camera 66. Suitably, the camera 66 is configured to capture or form one or more images indicating the fluorescence of the atoms in the register and/or in the sub-register. A program that may be run on a classical computer system may be used to determine the position of the initially occupied sites 58, for example from the one or more images captured or formed by the camera 66. Additionally or alternatively, a user may provide input to determine such positions. When a classical computer is used, an algorithm is used to determine a set of moves, which can be effected by the optical tweezers, to rearrange the initial configuration of the register or sub-register to the desired predetermined configuration of the register or sub-register. The algorithm may be run on a GPU. Running the algorithm on a GPU can enable real time processing of the algorithm. A Field Programmable Gate Array (FPGA) may be used to transfer data in this operation. The data that corresponds to the required 'moves' is then communicated to the 2D acousto-optic laser beam deflectors 48.

Optionally a further image may be acquired in a similar way to check whether the register or sub-register formed has atoms in the predetermined positions. Furthermore, when any quantum processing is complete, the sub-register may be read out in a similar way using the camera 66, or more generally the detector 20. The described process of setting up a sub-register is optional. The use of the atoms in the register may be performed, in principle, without the need for setting up a sub register.

Quantum processing using the register

The sub-register of atoms described herein that is operated on to perform quantum computing operations may be referred to in the following discussions as simply the 'register'. Furthermore, it is to be understood that any quantum operations made on the register, according to a desired quantum algorithm, may be repeated one or more times to reconstruct the relevant statistical properties of the final quantum state produced. This is typically done because of the probabilistic nature of each possible outcome imposed by quantum mechanics.

As described herein, the quantum states of the atoms may be controlled by one or more atomic state actuators such as the atomic state actuators 12a, 12b exemplified in figure 2b. It is assumed in the following discussions that the atomic state actuators 12a, 12b comprise lasers. Other atomic state actuators or types of atomic state actuators may be used. The quantum system 30 may be used for analog computing. The atomic state actuators 12a, 12b, comprising lasers in this example, are applied to the atoms to realise a Hamiltonian. The quantum system 30 may be used for digital computing where a quantum algorithm is decomposed into a plurality of quantum logic gates, typically wherein two or more of the gates are in succession. The quantum gates can be realised by inputting laser light from the lasers 12a, 12b into selected individual atoms in the register.

The two qubit states used in this example are the hyperfine ground states of the rubidium atom. Hyperfine states of other atoms may be used in the alternative. These ground states have long or infinite lifetimes that prevent radiative coupling to the electromagnetic environment. This is advantageous because digital quantum computing requires qubits that are robust against decoherence. The spacing between atoms in the register may be several micrometres. The lasers 12a, 12b are typically focussed using lenses such as the second lens 52b, and other lenses not shown in figure 2b. The laser used for transitioning the atoms between these two hyperfine ground states may be a Raman laser. Such a Raman laser and its output light may be referred to herein as the 'Raman channel'. There may be a plurality of Raman channels used.

Quantum logic gates may be implemented by operating on a single qubit or operating on multiple qubits, such as two or more qubits. A single-qubit gate may be implemented by having a laser 12a, 12b act upon the atom wherein any single-qubit gate may be implemented by tuning the properties of the incoming laser signal. This laser signal may be referred to as a 'control field'. By changing the properties of the control field, any arbitrary rotation of the qubit state, on the Bloch sphere, may be performed. The atom-laser field interaction is affected by the Rabi frequency (its strength, proportional to the amplitude of the laser field); the detuning $\delta$ (the difference between the qubit resonance and the field frequencies) and their relative phase. Driving the control field for a duration $\tau$ induces rotations around the (x, y, z) axes. Hence, any single-qubit gate can be implemented by tuning the pulse duration, the laser intensity, and the detuning and the phase of the laser.

In more detail, the transitions between atomic states - hence between quantum states - of the atomic system, may be driven through the emission of pulses by one or more electromagnetic sources. A pulse may be defined as the modulation of a channel's output amplitude, detuning, and phase over a finite duration $\tau$. For a channel targeting the transition between notional energy levels *a* and *b,* with resonance frequency $\omega_{ab} = |E_a - E_b|/\hbar$, the output amplitude determines the Rabi frequency $\Omega(t)$, and the detuning $\delta(t)$ is defined relative to $\omega_{ab}$ and the frequency of the channel's output signal $\omega(t)$, as $\delta(t) = \omega(t) - \omega_{ab}$. Additionally, the phase $\phi$ of a pulse can be set to an (arbitrary) constant value. A pulse-driven transition between two energy levels can be mapped to a spin-1/2 system through the drive Hamiltonian:

$$\mathcal{H}^D(t) = \frac{\hbar}{2}\Omega(t) \cdot \sigma \qquad \text{Equation 5}$$

Where $\sigma = (\sigma^X, \sigma^Y, \sigma^Z)^T$ is the Pauli vector and $\Omega(t) = (\Omega(t)\cos(\phi), -\Omega(t)\sin(\phi), -\delta(t))^T$ is the rotation vector.

In the Bloch sphere representation, for each instant *t*, this Hamiltonian describes a rotation around the axis $\Omega$ with angular velocity:

$$\Omega_{EFF} = |\Omega| = \sqrt{\Omega^2 + \delta^2} \qquad \text{Equation 6}$$

as illustrated in figure 1.

These parameters for driving the control field may be controlled using direct digital synthesizers (DDS) or RF sources that drive acousto- and electro-optic modulators (AOM and EOM) placed on the laser beams or other electromagnetic sources. As an illustration, when driving the control field at resonance ($\delta = 0$), the qubit oscillates in time between the states 10) and 11).

One-qubit gates are specific unitary transformations described by 2-by-2 complex matrices transforming one qubit state into another. Notable examples are the NOT gate that changes the state 10) into 11) and vice-versa. The NOT gate is shown in equation 7.

$$\text{NOT} = \begin{bmatrix} 0 & 1 \\ 1 & 0 \end{bmatrix} \qquad \text{Equation 7}$$

The Hadamard (H) gate is another single-qubit gate that generates superposition of both states starting from a pure state. In the $\{ |0\rangle, |1\rangle \}$ basis, the Hadamard gate is as shown in equation 8.

$$\text{H} = \frac{1}{\sqrt{2}} \begin{bmatrix} 1 & 1 \\ 1 & -1 \end{bmatrix} \qquad \text{Equation 8}$$

The NOT gate may be implemented by a $\pi$ rotation about the *x* axis in the Bloch sphere whilst the Hadamard gate may be implemented by a $\pi$ rotation about the (*x + z*) axis.

Two-qubit gates are unitary transformations described by 4-by-4 matrices that transform one two-qubit state into another, allowing the generation of entanglement in the register. From a physics viewpoint, their implementation requires an interaction between the qubits. However, neutral atoms in their electronic ground state can only interact significantly via contact physical collisions. Single atoms are typically separated by a few micrometres in the register and therefore do not naturally 'feel' each other. Therefore they do not normally interact. Two or more qubit gates described herein may cause different qubits to interact using Rydberg states, in particular through the Rydberg blockade effect. An atom in a Rydberg state or a 'Rydberg atom' is an excited atom with one or more electrons that have a very high principal quantum number, *n*, entailing that the electron is far from the nucleus and thus allowing that atom to interact with another atom. The laser(s) 12a, 12b used to impart light at the wavelength needed for the Rydberg transition may be referred to as the Rydberg laser. The Rydberg laser and its output light may be referred to herein as the 'Rydberg channel'.

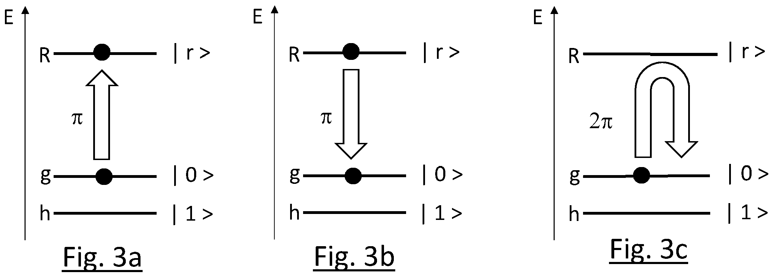

Figures 3a-3c schematically show three levels of the atomic system of the rubidium atoms used in this example. The energy levels 'g' and 'h' denote the hyperfine states that represent the 10) and 11) qubit states respectively, whilst 'R' represents the Rydberg state of the atomic system and is associated with quantum state |r⟩. The label 'π' in figures 3a and 3b is shown when a single transition is made between the g and R state indicating that a π change in θ (see equation 4) has been imparted into the atomic system because of the overall transition. Similarly, when a laser field of sufficient duration and amplitude has been imparted onto the atom to transition it from the g energy level up to the R energy level and then back to the g energy level (within the same control field input), this is labelled as '2π' indicating that a 2π change in θ (i.e., a full Bloch sphere rotation) has been imparted into the atomic system because of the overall transition. The laser fields that give rise to these π and 2π transitions may be respectively referred to as a π-pulse and a 2π-pulse. The corresponding change in θ may be referred to herein as a 'phase change' or 'phase factor'. It is understood that the input control fields causing these transitions have a wavelength resonant with the 10) to |r⟩ transition and not resonant between the 10) and 11) transition. Figure 3a shows the atomic transition from the g level to the R level with a π-pulse. Figure 3b shows the atomic transition from the R level to the g level with a π-pulse. Figure 3c shows the atomic transition from the g level to the R level and back to the g level again with a 2π-pulse.

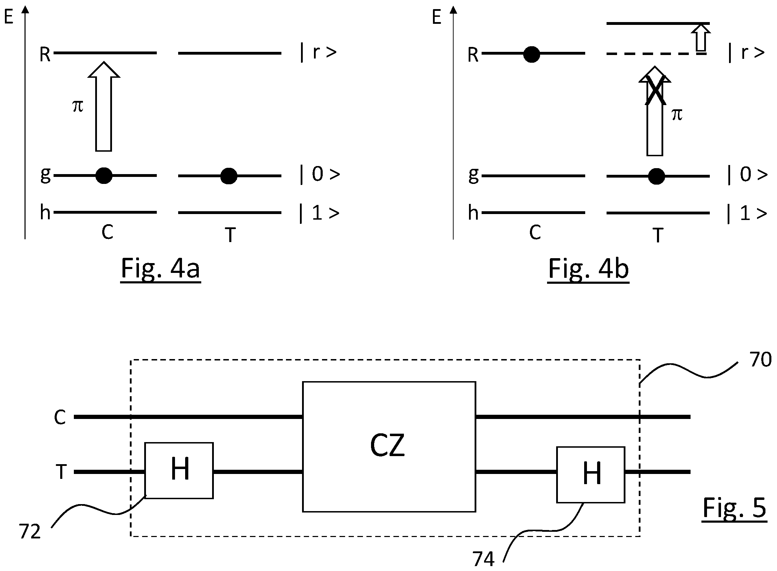

The Rydberg blockade may be used in the situation where two neighbouring atoms are both in the 10) state, i.e., both at the g energy level as shown in figure 4a. In the example illustrated in figure 4a, the described energy levels are shown for two identical rubidium atoms wherein the first atom is termed the 'control' atom (or control qubit), labelled 'C'. The second atom is termed the 'target' atom (or target qubit) labelled 'T'. The Rydberg blockade may come into effect when one of the atoms, for example the control atom C is transitioned to the R energy level with a π-pulse as shown in figure 4a. At a time after the C atom has transitioned to the R state, the equivalent R state energy level for the T atom is raised above its normal energy level due to the effect of the C atom being in a higher energy state. If a π-pulse is then introduced to the T atom whilst this 'blockade' is in effect, as shown in figure 4b, the π-pulse will not transition the T atom from the g energy level to the R energy level due to the laser wavelength now being detuned from the energy difference between the new Rydberg energy level and the g energy level. As such, the T atom remain in the g state. The Rydberg blockade may therefore be used to enable the state of one qubit (C atom) to affect the state of another qubit (T atom). The cross over the arrow in figure 4b, and in other figures, indicates that the transition did not occur.

The Rydberg blockade may be used to implement a Controlled-Z (CZ) gate with the atomic system of the quantum computer 30. As shown in the example quantum circuit of figure 5, a CZ gate may be used with two Hadamard (H) gates, one each side of the CZ gate, to form a CNOT gate 70. The CNOT gate flips a target qubit state if, and only if, a control qubit is in the state 11). The CNOT gate 70 can be implemented as follows. The target (T) qubit atom is operated on with a first H gate 72; then the T and C atoms are operated on by the CZ gate; then the T atom is operated on again by a further second H gate 74. The CNOT gate is an important gate in quantum computing because it may be shown that any quantum algorithm may be implemented by combinations of CNOT gates and/or single-qubit operations changing the qubit state to any arbitrary state around the Bloch sphere.

The CNOT gate and the CZ gate are shown below in matrix form in equations 9 and 10 respectively.

$$\begin{bmatrix} 1 & 0 & 0 & 0 \\ 0 & 1 & 0 & 0 \\ 0 & 0 & 0 & 1 \\ 0 & 0 & 1 & 0 \end{bmatrix} \qquad \text{Equation 9}$$

$$\begin{bmatrix} 1 & 0 & 0 & 0 \\ 0 & 1 & 0 & 0 \\ 0 & 0 & 1 & 0 \\ 0 & 0 & 0 & -1 \end{bmatrix} \qquad \text{Equation 10}$$

The atomic states of a two-qubit neutral atom system may be used to form a gate that, together with a global

phase of $\pi$, is equivalent to the CZ gate as shown in equation 11.

$$\begin{bmatrix} -1 & 0 & 0 & 0 \\ 0 & -1 & 0 & 0 \\ 0 & 0 & -1 & 0 \\ 0 & 0 & 0 & 1 \end{bmatrix} = e^{i\pi} \begin{bmatrix} 1 & 0 & 0 & 0 \\ 0 & 1 & 0 & 0 \\ 0 & 0 & 1 & 0 \\ 0 & 0 & 0 & -1 \end{bmatrix} = e^{i\pi}\text{CZ} \qquad \text{Equation 11}$$

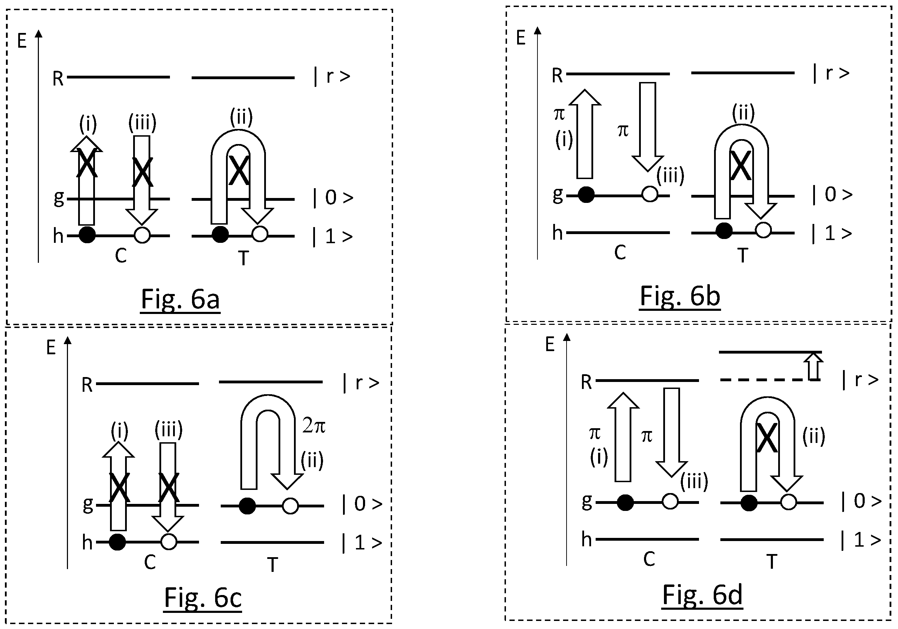

Figures 6a-6d show an example of how the above CZ gate may be implemented using the Rydberg blockade. In this example the CZ gate is implemented using three time-consecutive electromagnetic fields labelled (i), (ii) and (iii) respectively in the figures. Field (i) is a $\pi$-pulse operating on the control qubit (C atom). After field (i) has operated on the C atom, the second field (ii) operates on the target qubit (T atom). This second field is a $2\pi$-pulse. After field (ii) has operated on the T atom, the third field (iii) operates on the control qubit (C atom). This third field is a $\pi$-pulse. This pulse sequence may be referred to as a '$\pi$-$2\pi$-$\pi$ mechanism' or '$\pi$-$2\pi$-$\pi$ pulses'. Methods and systems presented herein may utilise such a '$\pi$-$2\pi$-$\pi$' mechanism. However, it should be appreciated that other pulse sequences for driving the quantum computer may be used, for example, but not limited to, a '$\pi$-$\pi$-$2\pi$-$\pi$-$\pi$' mechanism for a CCZ gate or another MCZ gate. A CCZ gate has two control 'C' qubits (such as q0 and q1) and a single target 'T' qubit (such as q2). Therefore the implementing pulses may be as follows: A) the first $\pi$-pulse operates on one of the two control qubits, such as q0; B) the second $\pi$-pulse operates on the other of the two control qubits, such as q1; C) the $2\pi$-pulse operates on the target qubit q2; D) the third $\pi$-pulse operates on the same qubit targeted in B), such as q1; E) the fourth $\pi$-pulse operates on the other of the two control qubits, such as q0.

Figures 6a-6d show the resulting atomic transitions for the C and T atoms when this pulse sequence is imparted. Each of figures 6a-6d show a different set of initial atomic states of the combined C-T atomic system. The black circles in the figures indicate the starting position of the atomic states. The white circles indicate the final positions after all the pulses (i)-(iii) have acted on the C-T atomic system.

Figure 6a shows the effect of the pulses when both the C and T atoms start in the lower h energy level (hence both in qubit state 11)). None of the pulses (i), (ii) or (iii) are at the resonant wavelength to promote the atoms to the Rydberg energy level and therefore both the C and T atoms make no transitions with any of the input pulses (i)-(iii).

Figure 6b shows the effect of the pulses (i)-(iii) when the C atom starts at the higher g energy level (hence in qubit state 10)) whilst the T atom starts in the lower h energy level (hence in qubit state 11)). The (i) pulse causes the C atom to transition from the g to the R energy level, incurring a $\pi$ phase factor. The (ii) pulse is off-resonance for the h-R energy level transition so the T atom stays at the h energy level and does not make an atomic energy level transition upon receiving the (ii) pulse.

The (iii) pulse causes the C atom to transition from the R energy level back to the g energy level, incurring a further $\pi$ phase factor. The total phase factor imparted onto the two-qubit quantum system with the (i)-(iii) pulses is therefore $2\pi$.

Figure 6c shows the effect of the pulses (i)-(iii) when the C atom starts at the lower g energy level (hence in qubit state 11)) whilst the T atom starts in the higher g energy level (hence in qubit state 10)). The (i) pulse does not cause the C atom to transition from the g to the R energy level because it is off-resonance. The (ii) pulse is on-resonance for the g-R energy level transition so the T atom transitions up to the R energy level and back to the g energy level, picking up a $2\pi$ phase factor. Like the (i) pulse, the (iii) pulse does not causes the C atom to transition. The total phase factor imparted onto the two-qubit quantum system with the (i)-(iii) pulses is therefore $2\pi$.

Figure 6d shows the effect of the pulses when both the C and T atoms are in the higher g energy level (hence both in qubit state 10)). The (i) pulse causes the C atom to transition from the g to the R energy level, incurring a $\pi$ phase factor. The temporary transition of the C atom to the Rydberg state imposes a Rydberg blockage to the T atom, thus preventing the (ii) pulse transitioning the T atom from the g to the R back to the g energy level. The (iii) pulse causes the C atom to transition from the R energy level back to the g energy level, incurring a further $\pi$ phase factor. The total phase factor imparted onto the two-qubit quantum system with the (i)-(iii) pulses is therefore $2\pi$.

The above phase factors incurred from the (i)-(iii) pulse sequence give rise to the matrix values on the left-hand side of equation 11.

The above is an example of a CZ gate that can be used to generate a CNOT gate, as discussed herein. Other gates may be used using similar principles of a pulse sequence utilising the Rydberg blockade. The effect of the Rydberg blockade entangles the two qubits in the system described, but it is to be understood that other entanglement mechanisms may be used, and more than two qubits may be entangled by the Rydberg blockade.

<u>General comments about the neutral atom quantum computer</u>

The atoms of a neutral atom quantum computer, as can be used by the methods and systems described herein, may be formed of any of the alkali metal atoms or Group 1 atoms of the periodic table; namely, Lithium (Li), Sodium (Na), Potassium (K), Rubidium (Rb), Caesium (Cs), and Francium (Fr). An advantage of alkali element atoms is that they are suitable for laser cooling. Although atoms used in the ensemble of a neutral atom quantum computer are typically alkali elements, other elements may be used including, but not limited to, alkali earth elements where one of the two valence electrons is promoted to a metastable state before being transitioned to a Rydberg state for implementing a blockade effect. Of the alkali elements, neutral atom quantum computers may preferably use heavy alkali atoms Rb and Cs. Such heavy alkali atoms have relatively large hyperfine energy splitting in the excited manifolds of the first resonance lines. Such hyperfine states allow for qubit measurements by light scattering.

Example methods described herein use a Rydberg state to entangle qubits. Rydberg-mediated quantum information processing can be implemented using the blockade effect or other Rydberg related effects. The Rydberg state used by example methods may be any of the states in the Rydberg series for that atom type. Rydberg states are not long-lived states and have a finite lifetime due to radiative decay. The amplitude, hence, Rabi frequency, of the electromagnetic pulse to excite an atom to a Rydberg state may vary. This can affect the speed at which the transition takes place. A fast transition minimises spontaneous emission, but a slow transition maximises Rydberg blockade effectiveness. The choice of EM pulse amplitude and duration may therefore be a trade-off between these two factors. An advantage of using the Rydberg blockade is that as long as the value of the blockade shift in the target atom energy level is large enough, then the blockade does not need to be further controlled in terms of energy-shift magnitude for the effect of the blockade to be present and implement the gate functionality. Furthermore, the interaction range, in terms of atom-atom distance, is large enough so that atoms involved in the blockade effect can be spaced far enough apart so that they are optically resolvable without needing to further move the atoms from their positions after the interaction. The Rydberg blockade may be optimised for MHz range of gate-speed operations due to the finite lifetime of the energy states. The Rydberg blockade effect from exciting one atom may affect (hence block the subsequent Rydberg transition of) more than one other neighbouring atom, for example an ensemble of atoms. Furthermore, the blockade may in principle be initiated by a control field transitioning atoms from a lower energy hyperfine state (than shown in the figures herein) to the Rydberg state.

Different types of traps may be used including, as described herein, Magneto-Optical Traps (MOT). Other traps may be used including Far-Off Resonance optical Traps (FORT) and magnetic traps such as cryogenic magnetic traps. Multiple traps may be formed, for example by optical trapping in lattices formed by counterpropagating beams such as in the near infrared or by using long wavelength $CO_2$ lasers. Other alternatives include vapour cells. The spatial control and positioning/re-positioning of the atoms may use different types of devices and systems including but not limited to one or more, or a combination of, electro-optic deflectors, acousto-optic deflectors and micro-opto-electromechanical systems.

A common approach to quantum computing is digital. Here, a set of one-qubit and two-qubit gates are used to build a theoretically universal quantum computer. There have been attempts to build such a universal device with varying technologies, for example, superconducting circuits, trapped ions, neutral atoms and photonic devices.

In order to generate a graph from statistical properties for digital quantum simulation one could use a standardised method. For example, the Voronoi method can be used to generate a lattice with well-defined nearest neighbours. The corresponding interactions between nearest neighbours can be separately defined through sampling from the desired statistical distribution. Together these methods can establish a graph with the statistical properties needed and the implementation can be done through trotterisation and a SWAP network. More precisely, the interactions of the graphs are decomposed into single-qubit gates and two-qubit gates using the Suzuki-Trotter decomposition. A series of SWAP gates allows each interaction between the two qubits of interest to be performed irrespective of the connectivity of the device in use. A reduction in the resources required in this process can be obtained via heuristic methods.

Currently, a fully fault-tolerant quantum computer remains out of reach, but the last decade has seen much progress towards this goal. Quantum error correction protocols have been proposed to remove these errors but, before they can be implemented at a meaningful scale, the number of qubits in Noisy Intermediate-Scale Quantum (NISQ) devices and the noise level must be improved by many orders of magnitude. As the quantum circuits that are promised to solve real-world problems require large numbers of qubits and deep circuits, for example due to trotterisation, these devices are not yet practically useful. Despite these issues, there have been impressive results in recent years, for example, solving classically intractable sampling problems, and accurate quantum simulation of a spin system using more than 100 qubits, albeit for a classically tractable problem. As a result of these successes, quantum computers have the potential for short-term application in fields such as quantum chemistry, the financial sector, pharmaceuticals, and artificial intelligence.

Analog quantum processors are an alternative avenue for solving complex problems. Such devices use the extremely accurate control that has been developed experimentally with quantum systems in recent decades. By carefully isolating a given register of particles and understanding the underlying physics that governs the interactions between these particles we have access to and control over a resource Hamiltonian which we can use to encode and solve problems of interest. In an attempt to build analog devices, technologies such as trapped ions, cold atoms and photonics have been used. In the present techniques, examples are given that are focussed on neutral atoms as the particles in use, but it is to be appreciated that the present techniques are more broadly applicable. While analog devices are not fully universal, and are thus more limited in their potential use cases, they have lower error rates than current digital quantum computers and therefore are likely to show the first industry-relevant quantum advantage.

Naturally, as analog devices are closely related to quantum experimental setups, applications for quantum simulation are the most promising contender for early quantum advantage. In fact, there have been experimental results published that challenge state-of-the-art classical simulation methods already. Generalising the use of an analog system to problems outside the realm of quantum simulation is difficult. One issue is that of "always-on" interactions. Typically in physical systems, interactions between particles scale with their separation. While the exact scaling is defined by the type of particles in use the consequence is the same. For a fixed register of particles the interactions are fixed. As a result, performing quantum operations that act on an isolated part of the quantum system is difficult. This greatly limits the potential applications for analog quantum devices.

Analog quantum processor devices are typically limited to pulses that correspond to time evolution under a given Hamiltonian, for example an Ising Hamiltonian. Within the Ising Hamiltonian there are fixed, always-on, interactions between qubits. The Ising Hamiltonian comprises a spin-spin coupling coefficient. In an example Hamiltonian useful in the present techniques, the always-on interactions between qubits scale down with the sixth power of their separation. Unless the qubits are shuttled around, these interactions are fixed throughout any quantum simulation experiment. As a result, the realization of digital quantum gates between a subset of the qubits is challenging as it is not possible to physically 'turn off' the interactions between this subset and the rest of the system. In digital quantum computing, each operation is assumed distinct and applied separately. Such assumptions do not necessarily hold true in the analog paradigm, which poses a challenge to simulations in analog quantum processors.

A third regime of interest is Digital-Analog Quantum Computing (DAQC). Here, a quantum device has access to both analog pulses alongside single-qubit gates. NMR setups are known to work within this regime, and proposals have considered realising a DAQC device in superconducting qubits with some early-stage experimental results. In fact, under the right conditions, this type of quantum computing can be universal. There are many proposed applications for such a device, for example, quantum chemistry, implementing the quantum approximate optimization and Harrow-Hassidim-Lloyd algorithms, and computing the quantum Fourier transformation. However, in order to realise single-qubit gates previous work has assumed either that interactions can be turned off, for example by using external laser strengths much larger than these interactions (a regime that is difficult to realise for many technologies), or the availability of analog pulses with lengths that are below experimental feasibility.

The present techniques aim to provide a general set of single-qubit gates for a device that has always-on interactions. The present techniques are applicable in architectures where there are modes of operation in which one can operate with always-on analog interactions and controllable pulses. Examples of such architectures include neutral atom quantum computing, superconducting quantum computing, ion trap quantum computing, and so on. Generally, the techniques described herein are applicable to any analog device, and/or any device operating at least partly in an analog regime. The limitations of the device might influence the capabilities of the techniques, and/or their application. The effects of this can be taken into account within the techniques themselves, such that the techniques remain applicable.

The present techniques aim to provide a general set of single-qubit gates for a device that has always-on interactions, for example in a regime where the external laser fields and pulse lengths are on the same order as the interactions between qubits.

Single-qubit addressability in a given field of the governing Hamiltonian is initially assumed. Techniques discussed herein, alongside a refocusing algorithm, allow for approximating a wide variety of two-qubit gates in a purely analog fashion. The present techniques may therefore act as a step to bridge the gap between analog and digital quantum computing. These techniques therefore potentially allow purely digital algorithms to be implemented in an analog quantum device.

Variational methods are proposed to find pulse sequences which approximate the effect of a wide family of conventionally known 'digital gates'. These methods aim to use minimal experimental requirements with the strictest only assuming the use of global pulses (i.e. the same fl and $\delta$ for all qubits) and single-qubit addressability in a given field. Furthermore, while the methods can be optimized on a small number of qubits, they generalize well to many-qubit simulations given they obey certain conditions. This means that, advantageously, the numerical optimization may be performed on a classical computer even for informing the programming of larger quantum computers.

The applications of protocols and methods described herein are wide reaching. The designed pulse sequences can be used to implement an approximation of a network of quantum gates, for example a SWAP network. This, in turn, may approximate all-to-all connectivity in a 1D system. In analog quantum computing, such as neutral atom hardware with fixed atomic positioning, tailored two-qubit interactions between atoms which lie far apart are not directly possible. Where the physical qubits (atoms) themselves are not moved, logical SWAP operations are necessary to move logical qubits to neighbouring atoms before performing the desired operation, incurring a heavy overhead. Furthermore, in a traditional system, single SWAP gates would require dealing with always-on interactions between other qubits.

With SWAP networks, which effectively implement a logical all-to-all connectivity between qubits, many kinds of algorithms are enabled which require qubits to interact in specific ways with all (or a large subset of) other qubits.

All-to-all connectivity allows for the implementation of one or more of annealing procedures, simulations of higher dimensional systems and efficient simulation of fermionic systems. Such simulations of fermionic systems can include Variational Quantum Eigensolver (VQE) methods, e.g. through the implementation of a Givens SWAP network.

Furthermore, the suggested pulse sequences prescribe how to implement effective single-qubit digital gates, emerging from the application of single-qubit pulse sequences under a significant always-on interaction term. The implementation of single qubit gates allows for the rotation of qubits to a wide range of different bases, in turn this allows for improved state preparation, measurement of many observables, notably measurements of energy and the implementation of randomized measurements protocols. Another use of this method is in the implementation of the refocusing algorithm. This allows one to 'turn off' the interaction between two given qubits which, in the most optimistic case, brings us closer to digital-analog quantum simulation.

In the present discussions, the Hamiltonian that governs an analog quantum computing device is introduced - the example focusses on a neutral atom setup. A discussion is then made of methods to approximate layers of single-qubit gates using only global pulses and single-qubit addressability in a single field. Given access to layers of single-qubit gates, a discussion is presented on how to perform the refocusing algorithm and thus approximate two-qubit gates. The use of these methods is exemplified through preparing an approximate SWAP gate network and solving simple chemistry problems. Experimental considerations to be taken into account to realise this protocol are discussed.

Hamiltonian for analog systems

An example of an analog quantum system is a neutral atom device. In neutral atom devices a qubit is encoded into two electronic states of an atom. As discussed elsewhere herein, typical choices for atomic species are rubidium or strontium atoms, in which two energy levels can be chosen to represent the two-level system of a qubit. Since the number of electronic states for a given atom is large, the various possible choices of $|0\rangle$ and $11\rangle$ can lead to different interaction landscapes. In particular, if we encode both $10\rangle$ and $|1\rangle$ in a highly excited state, a Rydberg state, the dominant interactions are resonant dipolar interactions. As a result the Hamiltonian of the system is the XY model, in which the interaction term scales as $1/r_{ij}^3$, where $r_{ij}$ is the distance between qubits $i$ and $j$. However, the present discussions consider encoding $10\rangle$ in a low-lying energy level and encoding $|1\rangle$ in a Rydberg state. The resultant Hamiltonian of the system with this choice is of Ising type, in which the interaction term scales as $1/r_{ij}^6$. Given that all atoms of a given species are inherently identical, this results in a qubit register free from manufacturing differences. Furthermore, the choice to use neutral atoms (e.g. net zero free charges) means that they do not interact strongly with the environment as compared to, for example, charged ions in ion trap quantum computing. This uniformity and neutrality provides a significant advantage in achieving low error rates.

The present techniques are applicable in architectures other than neutral atom architectures. The present techniques are applicable to platforms where always-on interactions are present. The present techniques are applicable where the Hamiltonian comprises a term representing always-on interactions. Such a Hamiltonian describing a system other than a neutral atom system may be similar to the Hamiltonian describing a neutral atom system. Examples of such systems include superconducting quantum computing, ion trap quantum computing, and so on. The techniques described herein are applicable to trapped ion setups. A discussion is provided herein on nearest-neighbour and next-nearest-neighbour interactions. In the trapped ion setup, next-nearest-neighbour interactions would have a greater influence than in the neutral atom setup. Accordingly, to improve fidelities, these are more likely to need to be taken into account than in the neutral atom setup.

The positions of the atoms within a neutral atom device are controllable through the use of optical tweezers - tightly-focused laser beams that are used to generate a trap that holds the atoms in place. The positions of the atoms can be chosen in an arbitrary fashion. Additional laser pulses can then be used to excite and de-excite atoms into and down-from their Rydberg levels. The relative positions of the atoms fully define the interaction landscape through the Van der Waals interaction that is present between two Rydberg atoms. The resulting effective Hamiltonian of the system is

$$\mathcal{H}(t) = \hbar \sum_{j} \frac{\Omega(t)}{2} \left\{ \cos[\Phi(t)]\,\hat{\sigma}_j^x - \sin[\Phi(t)]\hat{\sigma}_j^y \right\} + \hbar \sum_{j} \frac{\delta_j(t)}{2} \hat{\sigma}_j^z + \sum_{i>j} \frac{C_6}{r_{ij}^6} \hat{n}_i \hat{n}_j$$

Equation 12

Where $\hat{\sigma}_i^{x,y,z}$ are the Pauli $x$, $y$ and $z$ matrices acting on the ith qubit, $\hat{n}_i = \frac{1-\hat{\sigma}_i^z}{2}$ is the number operator, $r_{ij}$ is

the distance between the qubits *i* and *j*, $\Omega$ is the Rabi frequency and $\delta$ the detuning of the external laser that couples the qubit ground and Rydberg states. These can be seen as an effective magnetic field, with transverse and longitudinal components $\propto \Omega(t)$ and $\propto \delta(t)$ respectively. The detuning is allowed to be site-dependent. Each field can be varied by changing the intensity and frequency of the laser field. The third term in equation 12 relates to the interactions between individual atoms. More specifically, it corresponds to an energy penalty that two qubits experience if they are both in the Rydberg state at the same time - this leads to the well-known Rydberg blockade. This coupling between two atoms depends on the coefficient $C_6$ which is defined by the choice of Rydberg state, *n*.

It is desirable to 'turn off' the interaction term in the Hamiltonian. In other words, it is desirable to try and minimise or avoid the effect of this interaction term. Minimising or avoiding this interaction term results in a situation that is similar to single-qubit addressing. There are several approaches to 'turning off' this interaction term in the Hamiltonian.

One approach is to reduce interactions by physically moving qubits away from one another. This can be achieved in a neutral atom setup that incorporates qubit shuttling. A qubit can be moved away from other qubits, then a pulse applied to that single qubit. The aim of this separation of the qubit is for the effect of the pulse on that single qubit to not depend (or only insignificantly depend) on interactions with other qubits. The single qubit can then be moved towards another one or more qubits, e.g. back to its initial position. A drawback with this approach is the complexity and cost of the system needed to move one or more qubits back and forth, e.g. using additional lasers acting as optical tweezers, and the time taken to do so.

Another approach to reduce the effect of the interaction term in the Hamiltonian is to try and increase the values of the other terms in the Hamiltonian, effectively reducing the proportion of the overall Hamiltonian that is due to the interaction term. This can be done by increasing fl and $\delta$, e.g. by increasing the power of the lasers in the system. Such an approach could be implemented in an NMR-based quantum system. A drawback with such a system is the cost of higher-powered lasers. There are also concerns with scalability of NMR-based quantum systems, e.g. how the signal-to-noise ratio scales. A significant concern with NMR-based quantum systems is the very limited number of qubits. It is difficult to follow the approach of increasing $\Omega$ and $\delta$ in neutral atom systems due to constraints on $\Omega$ and $\delta$.

In an approach in which fl is increased, pulse lengths can decrease. Applying short pulses to qubits can be used to try and reduce the effect of the interaction term, thus reducing the time for interactions to occur and for the interactions to become 'noticeable' in the system, i.e. by affecting the state of one or more qubits. For a system of qubits arranged in a lattice, the Lieb-Robinson bound sets an upper limit on the speed at which information can propagate through the lattice. Over short periods of time, parts of such a lattice can be treated as acting independently of one another. A drawback with this approach is the cost and complexity of optics enabling short, accurate pulses. Such an approach is also likely to need relatively higher power lasers and/or faster electronics for delivering a desired pulse shape.

A further approach identified by the present inventors is to approximate single-qubit addressability using a combination of pulses representing global and local rotations. Note that the notation RX is used for a global rotation and Rx for a local rotation (and equivalently for *y* and *z* rotations). Approximating such pulses can be performed and/or improved by taking a variational approach to pulse design. As is described in more detail herein, the variational approach can make use of minimising a loss function.

The methods to perform the pulse sequences described herein on an analog quantum device, having an underlying Hamiltonian that is device-specific, may vary depending on the experimental limitations of the experimental set up.

Single-qubit addressability

Consider a set of four qubits in states $|1\rangle, |1\rangle, |1\rangle, |1\rangle$ and that we want to change the state of the second qubit, such that the states become $|1\rangle, |0\rangle, |1\rangle, 11$). With reference to the Bloch sphere representation illustrated in figure 1, the state $|1\rangle$ can be considered as being aligned with the positive z-axis. Whilst is it possible to apply a local rotation about the z-axis, i.e. Rz, this will have no effect on the state of the qubit, which in this representation will still be pointing along the positive z-axis, i.e. in state 11). However, a rotation of $\pi$ about the x-axis (or the *y*-axis) would 'flip' the state to 10), since the representation would then be pointing about the negative z-axis. Applying a global rotation, RX($\pi$), would not provide the desired selectivity of flipping only the second qubit, since all qubits would be flipped by such a global rotation. A local rotation, Rx($\pi$), is not readily accessible in the analog setup.

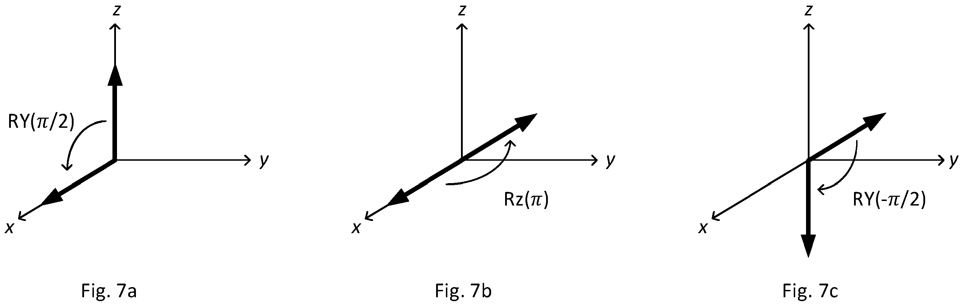

However, the present inventors have realised that a combination of global and local rotations that are accessible in such systems can result in the desired local rotation. In an example, a global rotation of $\pi/2$ can be made about the *y*-axis, i.e. RY($\pi/2$). This can be followed, for the selected qubit, by a local rotation of $\pi$ about the z-axis, i.e. Rz($\pi$). This can then be followed by a global rotation of $-\pi/2$ about the *y*-axis, i.e. RY($-\pi/2$). The qubits whose states are to be left unchanged will see rotations of RY($\pi/2$) and RY($-\pi/2$). Thus after both rotations, these qubits will be in their initial states (there is no overall change to these states). The selected qubit whose state is to be flipped, will see all three rotations. These are illustrated, in the Bloch sphere representation, in figures 7a to 7c. Figure 7a shows that the RY($\pi/2$) rotation changes the representation from pointing along the positive z-axis to pointing along the positive *x*-axis. Figure 7b shows that the Rz($\pi$) rotation changes

the representation from pointing along the positive *x*-axis to pointing along the negative *x*-axis. Figure 7c shows that the RY(-$\pi$/2) rotation changes the representation from pointing along the negative *z*-axis to pointing along the negative *z*-axis. Thus, the RY($\pi$/2)Rz($\pi$)RY(-$\pi$/2) rotation has changed the state of the selected qubit from 11) to 10), whilst leaving the states of the other qubits unchanged in state 11).

Thus, it will be appreciated that the sequence RY($\pi$/2)Rz($\pi$)RY(-$\pi$/2) corresponds to an Rx($\pi$) rotation. Similarly, it will be appreciated that a sequence RX($\pi$/2)Rz($\pi$c)RX(-$\pi$/2) corresponds to an Ry($\pi$) rotation.

In systems limited to single-qubit addressability in a single field, to perform gates in another basis, global rotations can be used. For example, by performing a global RY($\pi$/2) followed by single-qubit gates in the Z basis, then performing a global RY($\pi$/2), we effectively perform gates in the X basis.

Hence, this technique permits single-qubit addressability in analog quantum systems. This technique thus allows access to a wide set of single-qubit gates in the analog paradigm.

Note that, to realise a single-qubit rotation, Rz, use is made of the fact that a field term commutes with the inherent interactions in the neutral atom setup. This is not necessarily applicable to other setups. For example, this assumption may not hold for dipole-dipole interactions in a neutral atom set up.

Determining pulse sequences to approximate analog single-qubit gates

Methods are described to engineer layers of single-qubit gates on a purely analog device, i.e., in the presence of always-on interactions described by equation 12. Given the local addressability of detunings in equation 12 coupled with the fact that the effect of detuning in the Hamiltonian commutes with the qubit interactions, the implementation of a single qubit Rz gate is quite natural.

In order to create pulse sequences (sequences of time-evolution under the Rydberg Hamiltonian with different values of fl and $\delta$) that are equivalent to single-qubit Rx and Ry gates, we turn to global $\pi$/2 rotations that allow us to change freely between the *X, Y* and *Z* bases. Given that the strength of the Rabi frequency and detuning are on the same order as the interaction strength between particles, the protocols that will achieve this are non-trivial. However, in the following we show a surprisingly effective way to variationally prepare experimental pulse sequences that approximate these rotations with high accuracy.

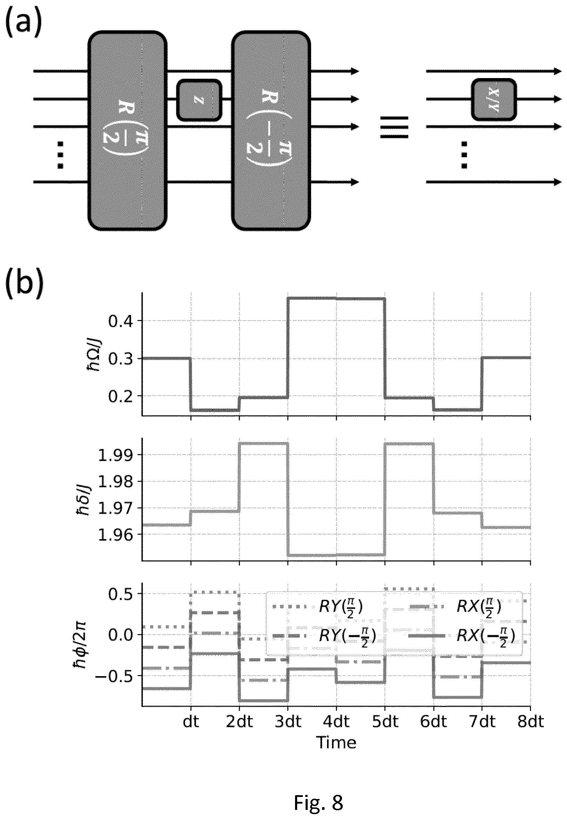

Once these global rotations are obtained, they can be combined with local Rz gates to implement layers of Rx, Ry gates. Figure 8(a) shows a schematic of how global pulses can be combined with local *Z* gates to perform local *X* or *Y* gates. For example,

$$Rx(\vec{\theta}) \equiv RY\left(\frac{\pi}{2}\right) \otimes Rz(\vec{\theta}) \otimes RY\left(-\frac{\pi}{2}\right) \qquad \text{Equation 13}$$

$$Ry(\vec{\theta}) \equiv RX\left(\frac{\pi}{2}\right) \otimes Rz(\vec{\theta}) \otimes RX\left(-\frac{\pi}{2}\right) \qquad \text{Equation 14}$$

where $\vec{\theta}$ is a vector of angles in which each qubit will rotate. Thus, the combination of these rotations and Rz gates allows one to then perform very general layers of single-qubit gates.

As these rotations are global, they scale well to larger systems that obey the underlying structure on which the optimization was performed.

Choice of geometry

These methods can be adapted for more general lattice geometries, but as an example we consider a linear chain of *N* qubits with nearest-neighbour (NN) separation *r* and periodic boundary conditions (PBC). Furthermore, we neglect next-nearest-neighbour interactions as they are 64 times smaller than the nearest-neighbour interactions. As a result, the interaction term in the Hamiltonian simplifies to

$$J \sum_i \hat{n}_i \, \hat{n}_{i+1} \qquad \text{Equation 15}$$

where $J = \dfrac{C_6}{r^6}$. The effect of the full long-range tail of the qubit interactions on the fidelities of the pulse sequences we determine in the NN setting will be considered elsewhere herein.

A direct consequence of the NN approximation is that we can easily realise any Rz rotation through the single-qubit addressability in detuning. For $\Omega = 0$, the evolution operator is given by

$$U\left(t, \vec{\delta}\right) \equiv e^{-i\mathcal{H}\left(\vec{\delta}\right)t} \qquad \text{Equation 16}$$

where

$$\mathcal{H}\left(\vec{\delta}\right) = J \sum_i \hat{n}_i \hat{n}_{i+1} - \hbar \sum_i \frac{\delta_i}{2} \hat{\sigma}_j^z \qquad \text{Equation 17}$$

Given that the longitudinal field induced by the laser detuning commutes with the qubit interactions, the effect of these interactions in the Hamiltonian evolution can be removed by carefully choosing the evolution time $t$ such that $tJ = 2\pi$ and thus the effect of $\exp e(-itJ \Sigma_i \hat{n}_i \hat{n}_{i+1}) \equiv exp(-i2\pi \Sigma_1 \hat{n}_i \hat{n}_{i+1})$ is equivalent to the identity. Thus, we are left with $U(2\pi/J, \vec{\delta}) =$ $\exp\left(i\frac{2\pi}{J}\hbar \sum_i \frac{\delta_i}{2}\hat{\sigma}_i^z\right)$ and, by choosing $\delta_i = \frac{\theta_i}{t}$, this can be tuned to act as Rz gates acting on each qubit with angles $\theta_i$.

## Optimization - variational approach to obtaining global rotations

As shown in equations 13 and 14, the combination of local Rz rotations with global $\pi/2$ rotations allows for the realisation of single qubit Rx and Ry rotations. The procedure to variationally determine these global rotation gates, $\left\{RX\left(\frac{\pi}{2}\right), RX\left(-\frac{\pi}{2}\right), RY\left(\frac{\pi}{2}\right), RY\left(-\frac{\pi}{2}\right)\right\}$, in an analog setting, will now be discussed.

It is desirable to determine a pulse sequence that approximates a global $R\left(\frac{\pi}{2}\right)$. This can be done, for example, by optimizing one or more of a global Rabi frequency, global phase and global detuning of each pulse.

The input pulse sequence that simulates a desired rotation can be found by one of several methods. In one example, the method comprises varying a parameter of a pulse or pulse sequence, such as a pulse amplitude, and comparing the results for the original parameter (e.g. pulse amplitude) and the varied parameter (e.g. pulse amplitude). The varying of the parameter of the pulse or pulse sequence can be performed in a multi-step process, such as an iterative process. An example of such an iterative process will now be described.

In this example, the parameter is the pulse amplitude, fl. An initial amplitude, $\Omega_I$, is selected. This initial amplitude can be selected in any desired manner, for example by random selection, by an educated guess, by reference to the effects of known pulse amplitudes and so on. Preferably, the initial amplitude is selected based on an amplitude range that is known to be experimentally suitable.

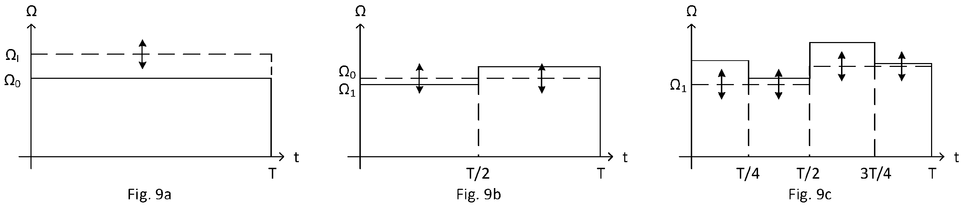

An initial pulse is set up that has amplitude $\Omega_I$ for a time duration $T$. That is, $\Omega = \Omega_I$ for $0 \leq t \leq T$. The amplitude of the pulse is then varied to obtain a more accurate result. The result can be considered to be more accurate where it more accurately approximates the desired rotation, for example a global $R(\pi/2)$ rotation. This variation of the amplitude will determine a new value for the amplitude, $\Omega_0$, which leads to a more accurate result than amplitude $\Omega_I$. This initial variation of the pulse amplitude is illustrated in figure 9a.

In a second step, the time period, $T$, can be divided into two or more sub-periods. The sub-periods can be of equal or unequal duration. Where there are more than two sub-periods, any given sub-period may be of the same duration as another sub-period and a different duration to a further sub-period. The number of sub-periods into which to divide the time period can be determined in dependence on, *inter alia,* the complexity of the amplitude variation, the time taken to determine the amplitude variation, the processing power needed to determine the amplitude variation, the accuracy with which the amplitude variation is to be determined, and so on. The relative duration of each of the sub-periods can be determined in dependence on, *inter alia,* the complexity of the amplitude variation, the time taken to determine the amplitude variation, the processing power needed to determine the amplitude variation, the accuracy with which the amplitude variation is to be determined, and so on.

In the present example the time period is divided into two sub-periods of equal duration, i.e. the time period, $T$, is divided in half, resulting in two sub-periods, $T_1$, for $0 \leq t \leq T/2$, and $T_2$, for $T/2 < t \leq T$. It will be apparent that the time period can be divided into three or more sub-periods, and/or that the sub-periods can be of any desired relative duration. Note that it is not critical that $T_1$ encompasses $T/2$ and that $T_2$ does not. Either or both of $T_1$ and $T_2$ can include, or not include, the value of $t = T/2$.

The amplitude is allowed to vary for at least one of the sub-periods. The variation of the amplitude for a sub-period can be performed independently of the variation (or otherwise) of the amplitude of any other sub-period. Preferably, the amplitude is allowed to vary for each of the sub-periods. The amplitude of one or more sub-periods is varied to obtain a more accurate result. Again, the result can be considered to be more accurate where it more accurately approximates the desired rotation. The starting amplitude for each sub-period is suitably the value for the amplitude for that portion of the pulse obtained in the previous step.

In the example illustrated in figure 9b, the initial time period of the pulse is split in two. The amplitude of the pulse determined in the first step, $\Omega_0$, is used as the starting amplitude for each of the two sub-periods. The amplitude of the pulse in each of the sub-periods is allowed to vary independently of the other. A new value of the amplitude in each sub-period is thereby determined. In the illustrated example, the new value of the amplitude in the first sub-period is $\Omega_1$.

This process can be repeated, as desired, for example until a result is achieved of a desired accuracy, or with an accuracy above a threshold accuracy. The process can be repeated until a desired time duration of a sub-period is reached. The process can be repeated whilst the time duration of the shortest sub-period remains greater than or equal to a minimum time period. The minimum time period can be selected as desired. For example, the minimum time period can be a shortest experimentally-feasible time period, such as 100 ns. Figure 9c illustrates a further division of each of the sub-periods of figure 9b, in this example by half again.

In another example of determining an input pulse sequence that simulates a desired rotation, the method comprises determining an initial sequence of pulses and performing an annealing process to find a global minimum of a function based on the initial sequence of pulses. The initial sequence of pulses can be determined in any suitable manner. For example, the initial sequence of pulses can be selected by random selection, by an educated guess, by reference to the effects of known pulses or known sequences of pulses (which may be shorter than, the same length as, or longer than the initial sequence of pulses), and so on. The initial sequence of pulses can, for example, be described as a function of a parameter associated with each pulse or with the sequence of pulses, for example $\Omega$. The annealing process can be used to determine the value(s) of this parameter for each pulse or for the sequence of pulses. In this way, the parameter can be optimised.

In another example of determining an input pulse sequence that simulates a desired rotation, the method comprises, similarly to the earlier example, varying a pulse amplitude (more generally, a parameter of the pulse sequence) and comparing the results for the original pulse amplitude and the varied pulse amplitude. The varying of the pulse amplitude can be performed in a multi-step process, such as an iterative process. An initial amplitude, $\Omega_I$, is selected. This initial amplitude can be selected in any desired manner, for example by random selection, by an educated guess, by reference to the effects of known pulse amplitudes and so on. Preferably, the initial amplitude is selected based on an amplitude range that is known to be experimentally suitable.

An initial pulse is set up that has amplitude $\Omega_I$ for a time duration $t$. Here, $t$ may represent the minimum time period, but it need not. The amplitude of the pulse is then varied to obtain a more accurate result. The result can be considered to be more accurate where it more accurately approximates the desired rotation, for example a global R($\pi$/2) rotation. This variation of the amplitude will determine a new value for the amplitude, $\Omega_0$, which leads to a more accurate result than amplitude $\Omega_I$. This initial variation of the pulse amplitude can correspond to the variation illustrated in figure 9a with reference to the earlier example.

Subsequently, the pulse length can be increased by a factor $K$, i.e. the total length of the new pulse is $Kt$. Suitably $K > 1$. Suitably, $K$ is a positive integer. In some examples, $K$ might be a positive number that is not an integer. The value of fl found in the preceding step ($\Omega_0$) can be reduced to a new value so that the new pulse is equivalent to the initial pulse. The new value of fl is suitably determined in dependence on $K$, that is, the new value of fl is suitably determined in dependence on the length of the new pulse, or the change in length from the initial pulse to the new pulse.

The value of fl is then allowed to vary for the new pulse. The value of fl can be allowed to vary independently for P sections within the new pulse length $Kt$. That is, the new pulse can be divided into P sections, and the value of fl (e.g. starting from the new value of fl for each section) allowed to vary separately for each. In this way, the value of fl can be optimised for the new pulse. $P$ may be a positive integer, where $P > 1$. In some examples, $P = K$. That is, where the pulse length is doubled from $t$ to $2t$ (i.e. where $K = 2$), the total pulse length can be divided into two sections, each of length $t$. The value of fl can be allowed to vary separately for both of these sections of length $t$.

In some implementations, each section of the pulse sequence is doubled, and the value of fl for that section is replicated for both new sections before being optimised. I.e., where an initial pulse of length $t$ has an optimised amplitude of $\Omega_0$, the succeeding steps may comprise:

i) doubling the initial pulse to a pulse of length $2t$, having two sections, $s_1$ and $s_2$, each of length $t$. The starting value for the amplitude of each section is $\Omega_0$. The amplitude is allowed to vary separately for each section, resulting in an optimised value of $\Omega_1$ for section $s_1$ and an optimised value of $\Omega_2$ for section $s_2$.

ii) doubling each of the section $s_1$ pulse and the section $s_2$ pulse, so that the total pulse length is $4t$:

section $s_{11}$ of length $t$ and starting amplitude value $\Omega_1$,
section $s_{12}$ of length $t$ and starting amplitude value $\Omega_1$,
section $s_{21}$ of length $t$ and starting amplitude value $\Omega_2$, and
section $s_{22}$ of length $t$ and starting amplitude value $\Omega_2$.

Then the amplitude is allowed to vary separately for each section, resulting in optimised values of $\Omega_{11}$, $\Omega_{12}$, $\Omega_{21}$ and $\Omega_{22}$ for section $s_{11}$, $s_{12}$, $s_{21}$, $s_{22}$, respectively.

This process can be repeated as desired. For example, the process can be repeated until a result is achieved of a desired accuracy, or with an accuracy above a threshold accuracy. The process can be repeated until a desired number of sections is reached, and or a desired total pulse sequence duration is reached, e.g. 4$t$, 8$t$ or 16$t$. The minimum time period can be selected as desired. For example, the minimum time period can be a shortest experimentally-feasible time period, such as 100 ns.

The accuracy of the result can be determined by any suitable method. One example is to minimise a loss function, though other approaches are possible. The approach can be selected based on a speed with which the desired accuracy is to be obtained, and/or based on computing power and/or time needed to perform the determination of the result.

Suitably, the fidelity of the result achievable with the present techniques can reach 99% (or more, e.g. at least 99.9%) with just four iterations of one of the iterative approaches described above. With a suitable loss function (an example of which is described elsewhere herein), the loss may decrease to 0.001 or less with just four iterations of one of the iterative approaches described above, for example where the initial time period, $T$, is split into eight equal sub-periods.

The particular loss function used is not critical to this approach, nor is the way in which the loss function is minimised. One example of minimising the loss function is to apply a Python minimising function.

Considering the experimental restrictions of the neutral atom quantum system, constraints can be imposed on $\Omega$ and $\delta$. In a typical neutral atom setup, restrictions on fl and $\delta$ can be as follows. $\Omega/2\pi$ can be in the range (0.1 to 2.5) MHz, with < 5% calibration error. $\delta/2\pi$ can be in the range (-8 to 8) MHz, with < 10% calibration error. Practically, the calibration error can be reduced in each case to approximately 2% with hardware changes and/or optimisations, and it is expected that this calibration error will reduce over time, as experimental systems improve. A restriction on the pulse length, $dt$, can require that $dt > 100$ ns.

For example, the following constraints can be imposed: $\hbar\Omega < J$ and $\hbar|\delta| < 2J$. In the following example, a four-qubit periodic system with nearest-neighbour interactions is considered. The loss function is taken as the infidelity, $L = 1 - F$, such that

$$ F = \frac{1}{\dim(G)} \left| \text{tr}\left( G^\dagger \prod_{i=1}^{p} \exp\left( -i\frac{\Delta t}{p\hbar} H(\boldsymbol{\Theta}) \right) \right) \right| \qquad \text{Equation 18} $$

where $G$ is the desired unitary operation acting on $N$ qubits, in our case $G = R\left(\frac{\pi}{2}\right)$, $p$ is the number of pulses considered, $\Theta = (\Omega_1, \Phi1, \delta_1, \cdots, \Omega_p, \Phi_p, \delta_\rho)$ and $H$ is the Ising Hamiltonian described by equation 12 restricted to NN interactions and strictly global pulses. Note that $L = 0$ implies that the pulse sequence found is correct up to a global phase shift.

In an example, $L$ is minimised for a single pulse, i.e. $p = 1$, of length $T$, using an L-BFGS-B optimizer. The parameters found with this first optimisation process are used as inputs to a second round of optimisation with two pulses, both of length T/2. The effect of this is to increase the expressibility of the pulse sequence. This is repeated, with each pulse in the sequence split into two individual pulses at each step, until a pulse length $dt$ for each pulse is reached, where $dt$ is, for example, a predetermined minimum pulse length set by experimental considerations. An example of the algorithm used is given in Algorithm 1.

---

**Algorithm 1** Global rotation pulse

---

$p_{max}, dt \leftarrow$ initialised by user

$T \leftarrow 2^{p_{max}} dt$

thresh $\leftarrow$ threshold initialised by user

$L \leftarrow$ initialised to a value $>$ thresh

**while** $L >$ thresh **do**

      $\Theta_0 \leftarrow$ initialised to random values

      $t \leftarrow T$

      **for** $p$ in $1 : p_{max}$ **do**

          $L, \Theta_{p+1} \leftarrow \min_{\Theta_p(t)}(L)$

          $t \leftarrow T/(2^p)$

      **end for**

**end while**

---

Note that, given each global rotation can be transformed into any other via a constant shift in the values found for $\phi$, this procedure only needs to be performed once. This improves the efficiency of the pulse sequence determination described herein.

The results of the outlined procedure are shown in figure 8(b), illustrating pulse sequences found to implement global rotations. The pulse sequences found through this procedure realise all $\pm\pi/2$ rotations with $> 99.9\%$ fidelity for a chain with periodic boundary conditions. The fidelities found for the implementation of these pulses on different qubit systems are presented in Table 1. While this optimisation was performed on a small system, as the optimisation was performed by considering global pulses and the limit of negligible next-nearest-neighbour interactions, these pulses generalise well to larger chains. As can be seen, using this measure of fidelity we obtain very accurate results even when doubling the number of qubits in the chain with respect to the number on which the optimisation procedure was implemented. Further, even on such small systems the fidelities of these pulses are comparatively higher when we switch from PBC to open boundary conditions (OBC).

**Table 1:** Fidelities of the global analog qubit rotations for a NN interacting linear chain with PBC and OBC.

| $n_{qubits}$ | NN PBC | NN OBC |
|---|---|---|
| 4 | 99.92% | 99.97% |
| 5 | 99.90% | 99.94% |
| 6 | 99.87% | 99.92% |
| 7 | 99.85% | 99.90% |
| 8 | 99.83% | 99.88% |

These techniques are useful for state preparation. That is, given an overall state of multiple qubits, which may be a random mix of states of 10) and 11) for all qubits, or all qubits having state 10) or all qubits having state 11), or some other state, these techniques for changing the state of a selected qubit are useful to prepare the qubits, such as an array of qubits, into the desired initial register state for quantum simulation. It is advantageous for the state preparation to take as little time as possible. This is so that, within an overall decoherence time, there is sufficient time remaining for quantum simulation to occur.

In a process such as changing the state of a given qubit, for example as part of a state preparation process, a small number of rotation pulses is applied. In the example discussed here, to change the state of a single qubit, three rotation pulses are applied. This process is therefore tolerant to a fidelity lower than that achieved above. This is because the fidelity will decrease as pulses are concatenated (i.e. as a pulse sequence is lengthened by adding additional pulses). A state preparation process, such as that described, is tolerant to lower fidelity pulses since there are not many pulses to be applied. It can, however, be useful to obtain a high fidelity (for example at least 80%, or at least 85%, preferably at least 90% or at least 95%, more preferably at least 99.5%, even more preferably at least 99.8%, and more preferably still at least 99.9%) so that even when a longer pulse sequence is used, the overall fidelity remains sufficiently high that the outcome of qubit states from applying that pulse sequence is consistent.

Thus, the iterative approach to pulse sequence determination described is useful, since it offers a way to achieve a desired fidelity. The iterations can be continued until a fidelity that meets or exceeds a desired threshold fidelity is obtained. Suitably, the threshold fidelity can vary. For example, the threshold fidelity can be dependent on a number of pulses in a pulse sequence, and/or a number of times that the determined pulse sequence will be applied, and/or the confidence with which an initial state is known, and/or a desired confidence in a state resulting from one or more applications of the pulse sequence.

In a practical implementation of a quantum system, such as a neutral atom quantum system, there will be a minimum time resolution of the hardware. There is little to no advantage to be obtained by optimising a pulse sequence to a time resolution that is lower than the minimum time resolution of the system on which the pulse sequence is to be applied. This is one reason why the time duration of the smallest sub-period can be restricted to being greater than or equal to a minimum time period, which minimum time period can be the time resolution of the system.

In a practical implementation of a quantum system, such as a neutral atom quantum system, there will be a maximal gradient between pulse strengths (amplitudes). That is, whilst it is possible to change a pulse strength in a very short timeframe, e.g. 1 ns, there is a maximum amount by which this pulse strength can be varied in that short timeframe. A larger timeframe of, e.g. 20 ns, or 50 ns or 100 ns is needed to vary the pulse strength by a greater amount (the longer the timeframe, the greater the permissible change in pulse strength, for a given maximum pulse strength gradient). In examples herein, a timeframe of 100 ns is given. In current experimental setups of neutral atom systems, this timeframe allows a change in pulse strength of appropriate amplitude to enable approximating gates as discussed herein, without exceeding the maximum pulse strength gradient. There is little to no advantage to be obtained by optimising a pulse sequence to require a change in pulse strength greater than a maximum allowed gradient of pulse strength.

Typically, the hardware on which a quantum system is to be simulated will contain imperfections, such as hardware imperfections. Such imperfections could arise due to tolerance in manufacturing processes, instabilities in lasers used to control particle movements and/or energy transitions, and so on. The techniques described herein for determining a pulse sequence to apply to cause one or more selected rotations are suitably performed whilst taking such imperfections into account. Thus, the presence of the imperfections does not deleteriously affect the outcome of applying the pulse sequence, since, in effect, the pulse sequence will be optimised on the system that includes the imperfections.

In the pulse splitting and variational process described, the pulse sequence comprises a step-wise $\Omega(t)$. This step-wise pulse sequence is likely to comprise sharp transitions in amplitude between sub-portions, or pulses in the pulse sequence. Since, in a practical embodiment, it will take a finite time to increase or decrease the amplitude fl, and/or to stabilise the amplitude at the new value, this means that the physical pulse sequence will approximate the determined pulse sequence, which is itself an approximation of the desired rotation. However, since the techniques described herein lead to the determination of a pulse sequence with a high fidelity (typically greater than 99.8%, and often greater than 99.9%), the approximation of the determined (step-wise) pulse sequence with a physically realistic pulse maintains a high fidelity. The time taken for transitions between amplitude levels and/or the time taken to stabilise at an amplitude level can be small compared to the time duration of the individual pulses in the pulse sequence (i.e. the sub-portions). Thus, the physically-realisable pulse sequence maps well to the determined pulse sequence, and the result of applying such a physically-realisable pulse sequence achieves the desired aims of changing states of selected, i.e. individually-addressable, qubits. In at least some currently-realisable implementations of a neutral atom quantum processor, the lasers used to effect the pulse sequence are controllable on very short timescales. A pulse can have a duration in the range of approximately 80 ns to 120 ns. The pulse may have a duration of up to approximately 110 ns or up to approximately 100 ns. The pulse may have a duration down to approximately 90 ns, or down to approximately 100 ns. Typically a pulse can have a duration of approximately 100 ns. The time taken to effect a change in amplitude can be up to approximately 15 ns, or up to approximately 10 ns, or up to approximately 5 ns. The time taken to stabilise the amplitude at a new value can be up to approximately 15 ns, or up to approximately 10 ns, or up to approximately 5 ns. It is expected that as experimental advances are made, the minimum duration of a pulse will decrease. It is expected that the time taken to effect a change in amplitude will decrease as experimental improvements are made. It is expected that the time taken for a pulse amplitude to settle at a new value will decrease as experimental improvements are made. Thus, the present techniques are expected to become more accurate and/or more applicable to a wider variety of situations, over time.

It is not necessary in all examples to apply a step-wise pulse sequence. Any one or more transition between separate pulse amplitudes in the pulse sequence can be smoothed out. For example, a smoothing function can be applied. It is possible for the step-wise function fl(t) to be converted to a smooth function $\Omega_{smooth}(t)$ that is continuous over time. Such a continuous function can be the same as a physically-realisable function or closer to or the same as what will be physically realisable. One way of converting a step-wise function to a continuous function is to interpolate between points lying on the step-wise function, for example values at the mid-points or edges of the sub-portions or individual pulses. It will be apparent that any desired point (be it a mid-point, and edge, or some other point in a sub-portion) can be used. The point used for one sub-portion need not be the same as the point used for a different sub-portion, but it can be. Correspondingly, a continuous function can be obtained by extrapolating from amplitude values in a determined pulse sequence such as a step-wise pulse sequence. The extrapolation can comprise extrapolating between points lying on the step-wise function, for example values at the mid-points or edges of the sub-portions or individual pulses. It will be apparent that any desired point (be it a mid-point, and edge, or some other point in a sub-portion) can be used. The point used for one sub-portion need not be the same as the point used for a different sub-portion, but it can be. The continuous function can be determined using a spline approximation. The continuous function can be determined using a Bézier approximation.

Suitably, the system can be calibrated using the continuous function. Such calibration can help ensure that the use of the continuous function does not degrade the fidelity achievable by applying the continuous function as the pulse sequence. The modelling of the pulse sequence that best approximates the desired rotation can be performed, as above, in a step-wise manner. The modelling of the pulse sequence can be performed using a continuous function. Thus, there need not be any loss in fidelity in using a continuous function as the pulse sequence to be applied to a quantum system.

In some implementations, the frequency range, and/or frequency ranges, to simulate in the modelling can be selected. In some implementations, the frequency, and/or frequencies, to simulate in the modelling can be selected. Selecting one or more frequencies and/or frequency ranges can be achieved by weighting frequencies and/or frequency ranges in the modelling. Fourier decomposition can be used in the modelling. The Fourier decomposition can be used to select the frequency or frequency range at which sampling is to be performed in the modelling. It can be advantageous to select the frequency and/or frequency range so that a frequency and/or frequency range can be selected that is appropriate for the physical system, i.e. to ensure that the frequency and/or upper end of the frequency range is not too fast for the system to reproduce. That is, a pulse sequence such as a continuous pulse sequence can be parametrised through a Fourier basis.

The optimisation of the pulse sequence can be performed by using an alternative pulse sequence, such as bang-bang pulses. The bang-bang pulses can be used instead of, or as well as, another type of pulse sequence.

The techniques for determining global rotation gates are discussed herein in the context of a neutral atom quantum computing system, but are not limited thereto. Given any analog quantum processor unit Hamiltonian and the bounds in experimentally feasibility, the present techniques to realise global rotations would be applicable. The accuracy with which the present techniques approximate global gates will depend on the nature of the analog system on which the techniques are implemented. For example, in systems with strong next-nearest-neighbour interactions, due care would be required to successfully implement the present techniques. The present description includes examples considering both nearest-neighbour interactions only, and considering the full long-range tail of interactions. It will therefore be appreciated that differing levels of interactions can be dealt with by the present techniques.

Analog two-qubit gates

Using the techniques discussed herein, it is possible to realise two-qubit gates by performing analog rotations. In implementing such two-qubit gates, it is useful to be able to, effectively, 'turn off' interactions between qubits, for example with a refocusing algorithm. The fundamental idea behind the refocusing algorithm is that, by evolving a system under a given pulse, followed by a second pulse of the same length in which the sign of the unwanted interactions is reversed, the resultant effect of this entire pulse sequence is only that of the desired interactions throughout the whole evolution.

Consider, as an example, a linear chain of three qubits, q0, q1 and q2, with open boundary conditions and nearest-neighbour interactions. A first pulse can be expressed with evolution, $\exp\left[-i(\sigma_0^z\sigma_1^z + \sigma_1^z\sigma_2^z)\frac{t}{2}\right]$. A second pulse can be expressed with evolution, $\exp\left[-i(\sigma_0^z\sigma_1^z - \sigma_1^z\sigma_2^z)\frac{t}{2}\right]$. The result of applying both the first pulse and the second pulse will be an overall evolution, $\exp[-i(\sigma_0^z\sigma_1^z)t]$. That is, the interaction between qubits q0 and q1 remains, whilst the interaction between qubits q1 and q2 can be considered to be 'turned off'.

In general, even though reversing the interaction strength of a given quantum system is not necessarily physical, this can be effectively achieved for an Ising-type Hamiltonian by using single qubit X gates,

$$X_i e^{t\sigma_i^z\sigma_j^z} X_i = e^{-t\left(\sigma_i^z\sigma_j^z\right)} \qquad\qquad \text{Equation 19}$$

which relies on temporarily flipping the computational basis from {0,1} to {1,0}: in that basis the Pauli-Z operator acquires a sign flip. The single-qubit gate, e.g. the X gate, can be obtained using the techniques described herein, for example.

Given the close relationship between Rydberg interactions and Ising interactions, and given that layers of X gates can be engineered through the pulse sequences outlined herein, an analog implementation of the refocusing algorithm can be realised. This permits entanglement of subsections of the qubit register in a controllable manner.

From NN interaction to *CZ* gates

As a natural example for an analog device, consider a procedure to perform different layers of effective *CZ* gates in an analog operation. A *CZ* gate acting on two qubits, *i* and *j,* may be defined as

$$CZ = \exp(i\pi\hat{n}_i\hat{n}_j) \qquad \text{Equation 20}$$

From this definition, it is possible to recognise the evolution of the nearest-neighbour device on an N-qubit linear chain with periodic boundary conditions and no external laser fields as

$$U(t,\vec{0}) = CZ(0,1)CZ(1,2)\cdots CZ(N,0) \qquad \text{Equation 21}$$

providing $t = \pi/J$. Once this equivalence has been established, we can consider using the refocusing algorithm to remove the unwanted *CZ* gates from equation 21. This can be done with reference to the effect of *X* gates surrounding such a pulse of

$$X_j e^{t\sum_i \hat{n}_i \hat{n}_{i+1}} X_j = e^{t\left(\sum_{i\neq j,j-1} \hat{n}_i \hat{n}_{i+1} - \hat{n}_j \hat{n}_{j+1} - \hat{n}_{j-1}\hat{n}_j + \hat{n}_{j-1} + \hat{n}_{j+1}\right)} \qquad \text{Equation 22}$$

By combining these two results and utilising single-qubit detuning to compensate for the linear term in the exponent of equation 22, we are able to produce layers of *CZ* gates between desired qubits. More explicitly, to compensate for the terms $e^{t(\hat{n}_{j-1}+\hat{n}_{j+1})}$ picked up in Equation 22 we would require a detuning pulse on both the *j* - 1 and *j* + 1 qubits of strength $\delta = -\dfrac{1}{t}$. Note, to 'turn off' the interaction between qubits *i* and *j,* we surround the second pulse in the sequence by *X* gates acting on one of the two qubits involved in the interaction we wish to turn off. When no *X* gates act on the qubit pair or an *X* gate acts on both qubits, the interaction will not be affected. For example, to remove the *CZ*(0,1) and *CZ*(2,3) from equation 21 we can perform the pulse sequence

$$CZ(1,2)CZ(3,4)\cdots CZ(N-1,N) = X_1 X_2 \otimes U\left(\frac{t}{2},\vec{0}\right) \otimes X_1 X_2 \otimes U\left(\frac{t}{2},\vec{\delta}^*\right) \quad \text{Equation 23}$$

where $\vec{\delta}^*$ is chosen to account for the unwanted linear terms accumulated by the action of each *X* gate.

The types of layers of *CZ* gates realisable through this protocol of removing given interactions depends on the geometry and boundary conditions of the system.

The ability to realise selected *CZ* gates, coupled with desired single-qubit gates in a desired basis, all within the analog paradigm, opens up the possibility to build up complex quantum processing operations all within the analog system. For example, as is described herein, it becomes possible to provide an analog framework for a network of gates, such as a SWAP network. It becomes possible to provide an analog framework for a Givens SWAP network. These possibilities increase the usefulness of analog quantum processing. In an example, described herein, the analog framework described provides an ansatz for VQE analyses.

Pulse sequences that approximate both global rotations and single-qubit gates are discussed herein in the context of neutral atom systems. Methods are discussed to approximate other gates based on such pulse sequences. The techniques and methods herein can readily be applied to other analog quantum computing system and are not limited to neutral atom quantum computing systems.

Periodic Boundary Conditions: Even and odd qubit chains

Given that the action of each *X* gate is to remove the effect of two distinct interactions in a system with periodic boundary conditions, it becomes clear that the number of qubits in the chain, even or odd, defines the subset of *CZ* gates realisable. Explicitly, in an even-numbered qubit chain we are able to realise layers of an even number of *CZ* gates, and in an odd-numbered qubit chain we are able to realise layers of an odd number of *CZ* gates. As a result, in order to realise a single *CZ* gate, for example *CZ*(0,1), we are required to work on a system containing an odd number of qubits. However, as many applications benefit from parallelisation of two-qubit gates, this does not greatly restrict potential use cases of methods described herein.

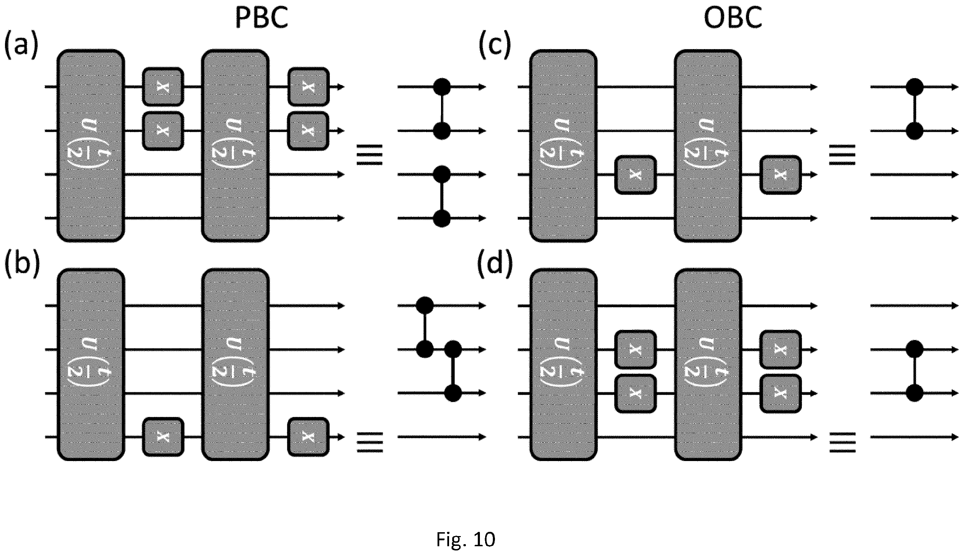

As an explicit example, consider a four-qubit chain with periodic boundary conditions. The possible two types of layers of *CZ* gates realisable (up to transnational symmetry) are *CZ*(0,1)*CZ*(2,3), by, for example, using *X* gates on qubits q0 and q1, and *CZ*(0,1)*CZ*(1,2) by, for example, using an *X* gate on qubit q3 (details of the pulse sequence are given in equations 24 and 25). These pulse sequences are, in this example, each of length $4T + 5\pi/J$. These achieve a fidelity of 99.6% and 99.7°/ respectively for a system with NN interaction. Figure 10a gives a schematic of a pulse sequence to perform a *CZ*(0, 1)*CZ*(2, 3) gate on a four-qubit nearest-neighbour linear chain with periodic boundary conditions. Figure 10b gives a schematic of a pulse sequence to perform a *CZ*(0, 1)*CZ*(1, 2) gate on a four-qubit nearest-neighbour linear chain with periodic boundary conditions.

$$CZ(0,1)CZ(2,3) = X_0 X_1 e^{-iJ\frac{t}{2}(\hat{n}_0\hat{n}_1 + \hat{n}_1\hat{n}_2 + \hat{n}_2\hat{n}_3 + \hat{n}_3\hat{n}_0)} X_0 X_1 e^{-iJ\frac{t}{2}\left(\hat{n}_0\hat{n}_1 + \hat{n}_1\hat{n}_2 + \hat{n}_2\hat{n}_3 + \hat{n}_3\hat{n}_0 - \frac{\hat{\sigma}_0^z + \hat{\sigma}_1^z - \hat{\sigma}_2^z - \hat{\sigma}_3^z}{2}\right)}$$

<div align="right">Equation 24</div>

$$CZ(0,1)CZ(1,2) = X_3 e^{-iJ\frac{t}{2}(\hat{n}_0\hat{n}_1 + \hat{n}_1\hat{n}_2 + \hat{n}_2\hat{n}_3 + \hat{n}_3\hat{n}_0)} X_3 e^{-iJ\frac{t}{2}\left(\hat{n}_0\hat{n}_1 + \hat{n}_1\hat{n}_2 + \hat{n}_2\hat{n}_3 + \hat{n}_3\hat{n}_0 + \frac{\hat{\sigma}_0^z + \hat{\sigma}_2^z}{2}\right)}$$

<div align="right">Equation 25</div>

Open Boundary Conditions

Given a linear chain with open boundary conditions, it is possible to prepare a given layer of *CZ* gates with no restrictions - this is a consequence of the end qubits interacting with only one other qubit. For example, we can prepare a *CZ*(0,1) gate through the use of an *X* gate on qubit q2 or a *CZ*(1,2) through the use of *X* gates on qubits q1 and q2 (details of the pulse sequence are given in equations 26 and 27). These pulse sequences are, in this example, each of length $4T + 5\pi/J$. These achieve a fidelity of 99.7% and 99.6% respectively for a system with NN interaction. Figure 10c gives a schematic of a pulse sequence to perform a *CZ*(0, 1) gate on a four-qubit nearest-neighbour linear chain with open boundary conditions. Figure 10d gives a schematic of a pulse sequence to perform a *CZ*(1, 2) gate on a four-qubit nearest-neighbour linear chain with open boundary conditions.

$$CZ(0,1) = X_2 e^{-iJ\frac{t}{2}(\hat{n}_0\hat{n}_1 + \hat{n}_1\hat{n}_2 + \hat{n}_2\hat{n}_3 + \hat{n}_3\hat{n}_0)} X_2 e^{-iJ\frac{t}{2}\left(\hat{n}_0\hat{n}_1 + \hat{n}_1\hat{n}_2 + \hat{n}_2\hat{n}_3 + \hat{n}_3\hat{n}_0 + \frac{\hat{\sigma}_1^z + \hat{\sigma}_3^z}{2}\right)}$$

<div align="right">Equation 26</div>

$$CZ(1,2) = X_1 X_2 e^{-iJ\frac{t}{2}(\hat{n}_0\hat{n}_1 + \hat{n}_1\hat{n}_2 + \hat{n}_2\hat{n}_3 + \hat{n}_3\hat{n}_0)} X_2 X_1 e^{-iJ\frac{t}{2}\left(\hat{n}_0\hat{n}_1 + \hat{n}_1\hat{n}_2 + \hat{n}_2\hat{n}_3 + \hat{n}_3\hat{n}_0 + \frac{\hat{\sigma}_0^z - \hat{\sigma}_1^z - \hat{\sigma}_2^z + \hat{\sigma}_3^z}{2}\right)}$$

<div align="right">Equation 27</div>

Variationally generated pulse sequences for global rotations have higher fidelity on linear chains with open boundary conditions than on linear chains with periodic boundary conditions. Further, linear chains with open boundary conditions provide additional flexibility to realise layers of *CZ* gates. Thus, such systems will be considered in the following examples, discussing how analog single-qubit and *CZ* gates can be used to build a network of gates such as a full SWAP network to produce all-to-all connectivity in an analog device. Such a network with all-to-all connectivity can be used to perform some simple analog VQE simulations of small molecules.

Generating a network with all-to-all connectivity

Attempts have been made to build devices with all-to-all connectivity (for instance using trapped ions, or photons). In currently available NISQ. devices based on superconducting qubits and neutral atoms connectivity is limited. An example in which this low connectivity can be an issue is the simulation of fermionic systems. When simulating the physics of such systems, the occupation number of a spin orbital is encoded in the qubit state. Therefore, in order to allow all orbitals to interact with each other, two-qubit gates are applied between all pairs of qubits. Mathematically, this can be seen through the loss of locality when applying the Jordan-Wigner transformation on simple molecular Hamiltonians to convert between the fermionic basis and qubit basis. Using quantum annealing to solve certain difficult quadratic unconstrained binary optimization (QUBO) problems is another example in which all-to-all connectivity is required. Such connectivity allows many NP-hard optimisation problems to be encoded in the ground state of an Ising model. This is thought to be a promising direction for useful quantum computation.

One method to circumvent the issue of low connectivity within a digital device is a SWAP network. Such a network uses SWAP gates that switch the quantum information between two given qubits. A SWAP network effectively inverts the position of the qubits in the circuit and allows one to enact the required operations between the given qubits when they are adjacent to each other in this cycle.

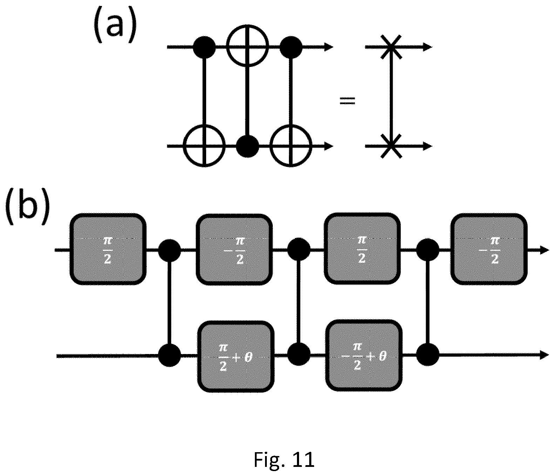

Performing such a SWAP network is not native to an analog device, thus conventional analog devices suffer from limited connectivity with no way to ameliorate this issue. Typically, in analog systems, long-range entanglement is generated through quench dynamics and is limited by a Lieb-Robinson bound of the resource Hamiltonian. However, using the protocols outlined herein, a SWAP network can be effected in the analog setting. The approximations to single-qubit gates in arbitrary bases and $CZ$ gates described herein permit the generation of an approximation to a SWAP network, in the analog setting. In particular, a SWAP gate can be decomposed into three CNOT gates as shown in figure 11(a). A CNOT gate can be realised through

$$\mathrm{CNOT(i,j)} = \mathrm{Ry}\left(\frac{\pi}{2}\right)CZ(i,j)\mathrm{Ry}\left(-\frac{\pi}{2}\right) \qquad \text{Equation 28}$$

Thus, it can be concluded that with the pulse sequences given herein, an analog SWAP gate becomes realisable.

As a simple benchmark, by using the described gates to perform a SWAP network on four qubits in a NN linear chain, a long-range CNOT gate can be realised between qubits q0 and q3. Such a pulse sequence can achieve a fidelity of at least 94% with SWAP gates that each require pulse sequences of length $3(6T + 5\pi/J)$. Another layer of complexity can be added to this proposal by replacing SWAP gates with Givens SWAP gates. This is useful since Givens SWAP gates can provide an effective ansatz for VQE problems.

Application: Variational quantum eigensolvers

As mentioned, a promising application of quantum computing that strongly benefits from all-to-all connectivity is the simulation of molecules.

A goal of molecular simulation is finding the ground state of a molecule, i.e., finding the state $|\psi\rangle$ such that the energy $E = \frac{\langle\psi|\mathrm{H}|\psi\rangle}{|\langle\psi|\psi\rangle|}$ is minimal. To do so, a technique called the Variational Quantum Eigensolver (VQE) can be used. Consider a variational state $|\psi_\theta\rangle$.

For any $\theta$, we then have

$$E_\theta = \frac{\langle\psi(\boldsymbol{\theta})|H|\psi(\boldsymbol{\theta})\rangle}{|\langle\psi(\boldsymbol{\theta})|\psi(\boldsymbol{\theta})\rangle|} \geq E_0 \qquad \text{Equation 29}$$

where $E_0$ is the ground state energy. This gives the scheme of the VQE algorithm:

1. choose a variational circuit $|\psi_\theta\rangle$.
2. choose an initialisation for $\theta$.
3. measure the value of the energy on a quantum computer (each Hamiltonian can be decomposed into a sum of Pauli operators, and each term can be measured on a quantum computer).
4. give the value of the energy to a classical optimizer, which will give a new $\theta$.
5. start again from point 3 until convergence of the optimization procedure.

An important consideration when attempting to implement the VQE algorithm is to choose an ansatz ($|\psi_\theta\rangle$) that is expressive enough, i.e., the ground state belongs to the family of states spanned by $|\psi_\theta\rangle$. To solve the molecular problem, the UCCSD (Unitary Coupled Cluster with Single and Double excitations) ansatz is often said to be one of the most accurate. Its principle is to start from the Hartree-Fock solution $|\Phi_0\rangle$ (the number state that has the lowest energy, and the right number of electrons) and see if exciting each "electron" (represented by $\hat{n}_p = \hat{a}_p^\dagger \hat{a}_p = 1$, where $p$ is the number of an orbital) and pair of electrons (hence singles and doubles excitations) on other orbitals lowers the energy of the state. In the Hartree-Fock basis, each basis function can be said to represent a fermionic mode.

A method to simplify the task of simulating these systems as well as halve the required resources is the paired-electron approximation. In this approximation, electrons are treated as only being able to occupy orbitals as pairs. Here, consider the simplification such that each molecular orbital is either occupied by an electron singlet pair or unoccupied. Under this assumption the Hamiltonian of a molecule is given by

$$\hat{\mathcal{H}} = C + \sum_{p,q} h_{p,q}^{(r1)} \, \hat{b}_p^\dagger \hat{b}_q + \sum_{p\neq q} h_{p,q}^{(r2)} \, \hat{b}_p^\dagger \hat{b}_p \hat{b}_q^\dagger \hat{b}_q \qquad\qquad \text{Equation 30}$$

where $\hat{b}_q$ are hardcore bosons representing the electron-pair annihilation operator in mode $p$ that satisfy the relevant (anti-) commutation relations, i.e. $\left[\hat{b}_p, \hat{b}_q^\dagger\right] = \left[\hat{b}_p^\dagger, \hat{b}_q^\dagger\right] = \left[\hat{b}_p, \hat{b}_q\right] = 0, \{\hat{b}_p^\dagger, \hat{b}_p^\dagger\} = {}_{\{\hat{b}_p, \hat{b}_p\}\,=\,0}$, and $\{\hat{b}_p, \hat{b}_p^\dagger\} = 1$, and $h_{p,q}^{(r1)}$ and $h_{p,q}^{(r2)}$ can be calculated from the one- and two-electron integrals.

To map this problem to a form that is applicable for a quantum computer we can use the transformation $\hat{b}_p = \frac{1}{2}\left(\hat{\sigma}_p^x + i\hat{\sigma}_p^y\right)$, resulting in a Hamiltonian of the form

$$\hat{\mathcal{H}}_{qb} \approx C + \sum_p \frac{h_p^{(r1)}}{2}\left(\hat{I}_p - \hat{\sigma}_p^z\right) + \sum_{p\neq q} \frac{h_{p,q}^{(r1)}}{4}\left(\hat{\sigma}_p^x \hat{\sigma}_q^x + \hat{\sigma}_p^y \hat{\sigma}_q^y\right) + \sum_{p\neq q} \frac{h_{p,q}^{(r2)}}{4}\left(\hat{I}_p - \hat{\sigma}_p^z - \hat{\sigma}_q^z + \hat{\sigma}_p^z \hat{\sigma}_q^z\right)$$

$$\text{Equation 31}$$

This form of the Hamiltonian is now in a basis that directly maps to qubits and allows us to find the ground state energy through a Variational Quantum Eigensolver (VQE) approach.

Importantly, the techniques described herein permit measurement of additional values compared to prior systems. It is possible to change basis between the *X, Y* and *Z* axis with high fidelity, for example using the described procedure to variationally prepare global $\pi/2$ rotations. With the analog pulses outlined above, we are able to prepare both *X* and *Y* polarised states as well as product states with high fidelities.

A typical quantum simulation will generate an output in the form $\langle \sigma^z\sigma^z + \sigma^z + \sigma^x \rangle$. Since this is a linear sum, it can be rewritten as $\langle \sigma^z\sigma^z \rangle + \langle \sigma^z \rangle + \langle \sigma^x \rangle$. In typical analog quantum systems such as neutral atom quantum systems it is possible to measure $\langle \sigma^z\sigma^z \rangle$ and $\langle \sigma^z \rangle$, but not $\langle \sigma^x \rangle$. Hence, the total energy of the system is not directly measurable.

Using the techniques described herein, it becomes possible, via rotations such as RY and Rx etc., to additionally access $\langle \sigma^x\sigma^x \rangle$, $\langle \sigma^x \rangle$, $\langle \sigma^y\sigma^y \rangle$, and $\langle \sigma^y \rangle$, for example by changing the basis into one that is measurable. Thus, whereas the total energy of the system was not formerly measurable, the present techniques enable access to additional measurables, permitting system energies to be measured in analog systems. This provides analog systems, in particular neutral atom systems, with increased simulation and measurement capabilities. Hence, this work opens the door to measurements in a general basis. This would allow for measurements of new observables, for example energy and dynamical structure factors.

Returning to the VQE approach, and noting that the molecular Hamiltonian is number conserving, i.e., $\sum_{p=0}^{q} \hat{b}_p^\dagger \hat{b}_q = n$ where *n* is the number of electrons in the system, then as mentioned a good choice for initial state during a VQE protocol is the Hartree-Fock state. This is the state in which the *n* lowest energy molecular orbitals are occupied with pairs of electrons, here *n* is the total number of pairs of electrons in the system. From this initial state a Givens SWAP network is a promising variational ansatz to find the ground state within the paired-electron approximation. A Givens SWAP gate is the combination of a Givens rotation followed by a SWAP gate, mathematically it is defined by

$$\text{GS}(\theta) = \underbrace{\begin{pmatrix} 1 & 0 & 0 & 0 \\ 0 & 0 & 1 & 0 \\ 0 & 1 & 0 & 0 \\ 0 & 0 & 0 & 1 \end{pmatrix}}_{\text{SWAP}} \underbrace{\begin{pmatrix} 1 & 0 & 0 & 0 \\ 0 & \cos(\theta) & -\sin(\theta) & 0 \\ 0 & \sin(\theta) & \cos(\theta) & 0 \\ 0 & 0 & 0 & 1 \end{pmatrix}}_{\text{G}(\theta)} \qquad \text{Equation 32}$$

in which $\theta$ is a variational parameter. A full digital Givens SWAP network is equivalent to the SWAP network with each SWAP gate being replaced by a Givens SWAP gate. The analog implementation of such an ansatz is now considered. A Givens SWAP network can be decomposed into three CZ gates and layers of single-qubit gates, as schematically illustrated in figure 11b. Thus, the methods described herein for determining analog pulses to approximate *CZ* gates and single-qubit gates can be used to build an analog pulse sequence that approximates the digital Givens SWAP network.

Referring to the example in figure 11b, a Givens SWAP gate between two qubits, q0 and q1, can be approximated by the following analog pulses.

1. $Ry\left(\frac{\pi}{2}\right)$ on $q_0$
2. $CZ(0,1)$
3. $Ry\left(-\frac{\pi}{2}\right)$ on q0, and $Ry\left(\frac{\pi}{2}+\theta\right)$ on q1
4. $CZ(0,1)$
5. $Ry\left(\frac{\pi}{2}\right)$ on q0, and $Ry\left(-\frac{\pi}{2}-\theta\right)$ on q1
6. $CZ(0,1)$
7. $Ry\left(-\frac{\pi}{2}\right)$ on q0

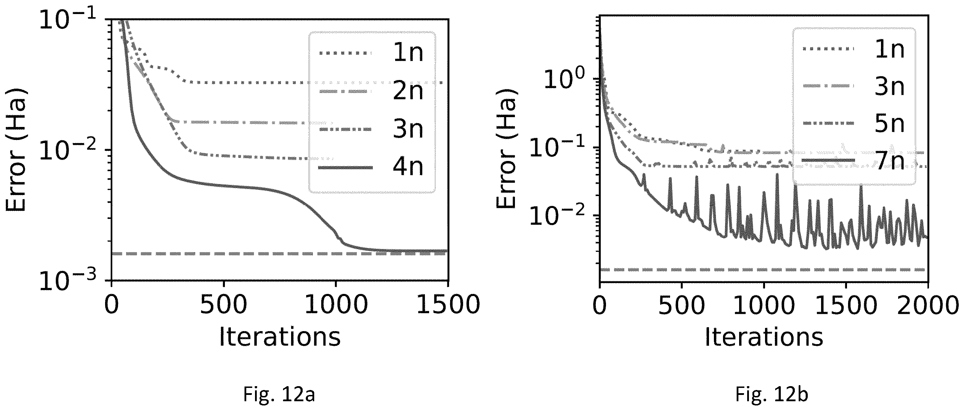

Such a variational architecture can be used to find the ground state energy of $H_2$ and LiH using an analog Givens SWAP network. For $H_2$, consider the 631g basis in which four qubits are required in the paired-election approximation. For LiH we consider the sto-3g basis in which six qubits are required in the paired-electron approximation. The evolution of errors throughout the VQE protocol is shown in figure 12a and figure 12b. Figure 12a shows analog VQE results for the $H_2$ molecule. Figure 12b shows analog VQE results for the LiH molecule. Figures 12a and 12b show the results for multiple ansatzes with varying depths of Given SWAP gates as a function of the number of qubits, $n$. In the figure labels, '1n' represents a depth of Givens SWAP gates equal to the number of qubits; '2n' represents a depth of Givens SWAP gates equal to twice the number of qubits, and so on. For $H_2$, $n = 4$ and for LiH, $n = 6$. As can be seen, the error of the VQE protocol can be reduced to be on the same order of magnitude of the chemical accuracy (indicated by the dashed line in each of figures 12a and 12b) with appropriate depths of the Givens SWAP gates.

The error is defined as the difference between the measured energy and the lowest value achievable in the paired-electron approach. Theoretically, the number of layers of Givens SWAP gates, required to reach the ground state is equal to the number of qubits. However, since the analog gates described herein (i.e. the analog approximations to such gates) do not have 100% fidelity, additional layers are required to account for this. The depth of the network (the number of layers of Givens SWAP gates) can be varied as a function of the number of paired electrons $n$, i.e. $n = 4$ for $H_2$ and $n = 6$ for LiH. Here, we used BFGS, a gradient-based optimizer and a convergence criterion of $\varepsilon = e^{-7}$. In figures 12a and 12b it can be seen that the present techniques are able to achieve an error on the same order of magnitude as the chemical accuracy (an error of $\leq 1.6 \times 10^{-3}$ Ha).

Implementing gates on other quantum processor unit systems

Given a digital quantum processor unit, then implementing a global rotation, single-qubit gates or two-qubit gates (or an arbitrary sequence built using the present techniques) involves breaking down the circuit into the native gates of the system. On a quantum device where the native gates are single-qubit rotations as well as CNOT gates, single-qubit rotations are trivial, global rotations can be given by a layer of single-qubit gates, and CZ gates can be realised via two Hadamard gates (a type of single-qubit rotation) and a single CNOT gate by CZ= (I⊗H)CNOT(I⊗H).

Experimental considerations

In this section realistic experimental constraints are considered, such as particle positions, interaction strengths, Rabi frequencies, detunings and coherence times. From these, coherence times to realise the gates described herein are presented. Further, the effect of the long-range nature of interactions in a realistic qubit register on the accuracy of the pulses is shown.

Pulse sequence depths

In this example, a rubidium-based neutral atom device with Rydberg level 60 is considered. The full $1/r^6$ long-range tail of the Van der Waals interactions is included. This example considers $N$ atoms in a circular geometry with inter-atomic spacing of $r = 6.24$ $\mu$m. This results in a nearest-neighbour interaction of $J \sim 2\pi \times 2.3$ MHz. Consider $dt = 108$ ns, such that the time to perform a local $RZ$ gate is 428 ns with $|\delta_i| = J$. The variationally prepared pulse sequences for the global $\pi/2$ rotation gates are such that $T = 864$ ns, $\Omega/2\pi < 1.2$ MHz and $|\delta/2\pi| < 4.6$ MHz. From these values the required pulse lengths of each of the gates can be calculated, see Table 2. Note, in order to run deep quantum circuits with more than one unique layer of qubit gates, it is desirable to have temporal control of the single-qubit addressability in laser detunings. An example of how this might be done is by having multiple SLM masks.

**Table 2:** Pulse lengths of given gates using proposed analog pulses.

| (layer of) Gate | Pulse sequence length (µs) |
|---|---|
| RZ | 0.4 |
| Global $\pi/2$ rotation | 0.9 |
| Local Rx, Ry | 2.1 |
| CZ | 4.5 |
| CNOT | 6.2 |
| SWAP | 18.7 |
| Givens SWAP | 22.1 |

Effect of long-range interactions

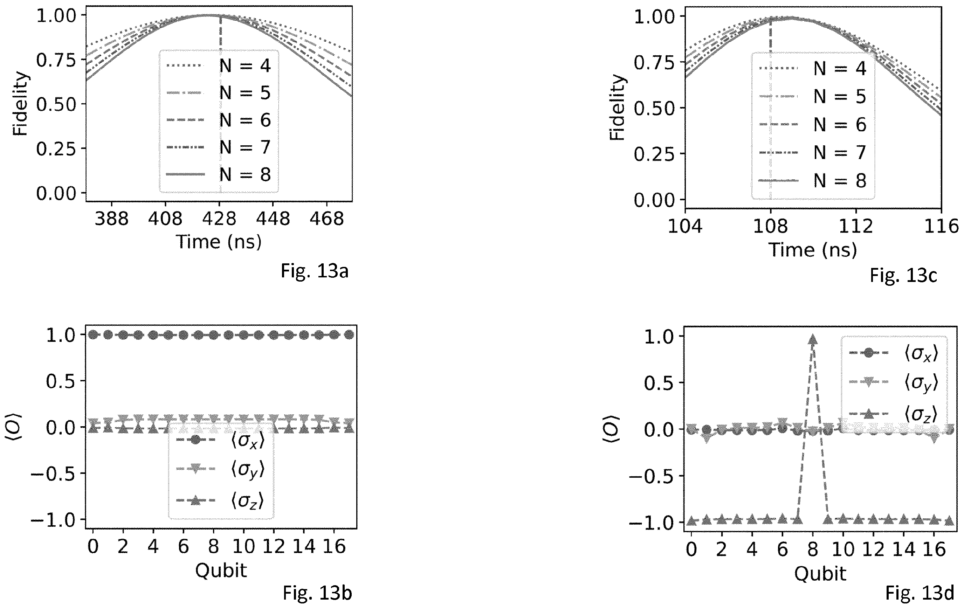

In this example the effect of the full long-range interaction tail on the fidelities of the described local Rz gates as well as on the pulses given in figure 8b (implementing global $X$ and $Y$ rotations) are considered. To estimate the effect of these long-range interactions in the limit $N \gg 1$, consider a linear spin chain with open boundary conditions. Figures 13a and 13c show results for the fidelity of analog Rz and global rotation gates, respectively, in the presence of long-range interactions showing the effect of varying the pulse length from the analytically predicted value using NN interactions (shown as a vertical dashed line). Figures 13b and 13d show the resultant local magnetisations after the analog pulses for a global $RY\left(\frac{\pi}{2}\right)$ and local $X_8$ gates respectively.

While the methods described herein to produce a local Rz gate are exact for NN interactions, they are approximate in the presence of the full long-range interaction tail defined in equation 12. As a result, the fidelity drops to ~98.9% for a system of eight qubits. However, by deviating the pulse length used away from the theoretically exact time for a NN system it is possible to retain a fidelity of 99.6% (see figure 13a, in which the fidelity is increased by shortening the pulse length used, by approximately 5 ns in this example). Further, in this setting of eight qubits, the fidelity of the global rotation pulse sequences falls by about 2-3%. However, by again allowing the length of the pulse sequence to vary it is possible to obtain a fidelity of 98.7% (see figure 13c, in which the fidelity is increased by lengthening the pulse length used, by approximately 1.5 ns in this example).

Generalisation to larger system sizes

In figures 13a to 13d, the generalisation to large qubit systems of the techniques described herein is demonstrated. The pulses, in the examples described herein, were optimised over a chain of four qubits. These pulses are applied, as shown in figure 13a for example, to a larger qubit system with $N = 18$. As is seen from figures 13a to 13d, the generalisation of the present techniques to such larger qubit systems shows good results, exemplified by high fidelity values. Thus, the present techniques are shown to be generally applicable.

In simulations considering the full long-range tails of the Van der Waals interactions, the qubits can be placed in a linear chain with open boundary conditions. As the fidelity given in equation 18 requires the calculation of the full unitary time evolution operator for a given pulse sequence, it is an expensive metric for chains of this length (i.e. longer chains such as with $N = 18$). Thus, as a simplified metric for fidelity, consider the overlap of (i) the state prepared by enacting the determined pulse sequence on the ground state with (ii) the exact state that is prepared via the target gate, $G$, i.e.

$$\tilde{F} = \langle 000\cdots 0|G^{\dagger}\prod_{i=1}^{p}\exp\left(-i\frac{\Delta t}{p\hbar}H(\Theta)\right)|000\cdots 0\rangle$$

Equation 33

For the pulse sequences variationally found for global $\pi/2$ rotations, there is an overlap of $\tilde{F} > 97\%$. This therefore provides an alternative useful metric for determining pulse sequences.

Further, simulations for a local $X$ gate on a single qubit were run in this experimentally inspired set up with a resulting overlap of $\tilde{F} \approx 85\%$. However, as mentioned previously, when introducing long-range interactions the Rz gate implementation is no longer exact. On further investigation, it was found that deviating the pulse length from the NN predicted time to 412 ns (a decrease of 16 ns), enabled an increase in the overlap of the single qubit Rx gate to $\hat{F} > 93\%$.

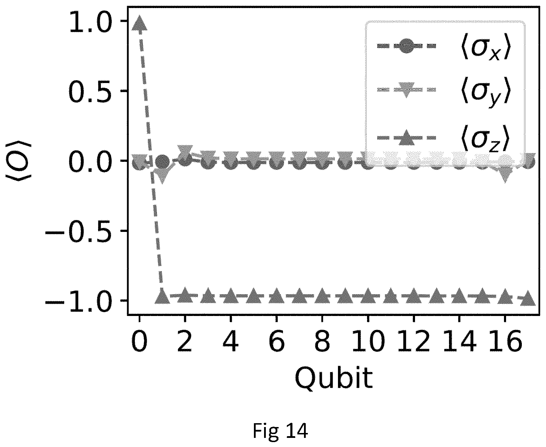

In figures 13b and 13d, the resultant local magnetisations of each qubit after the analog pulses for both a global $RY\left(\frac{\pi}{2}\right)$ rotation and a local $X_8$ gate are shown. The methods described herein work well for an edge qubit (e.g. q0 and q17 in the chain of eighteen qubits, considering a linear chain with open boundary conditions; see figure 14, showing resultant local magnetisations of each qubit in an 18-qubit system after the analog pulses for a local $X_1$ gate) as well as for non-edge qubits.

These results show that the determined pulse sequences, optimised on only four qubits with NN interactions, are still highly effective in larger systems such as those in which the full long-range tail is considered. The determined pulse sequences clearly show (up to small errors) the desired gate effects.

Examples of features of a classical computer/computing system for use with the method

Some portions of the description herein present the features of the method/system in terms of algorithms and symbolic representations of operations on information performed by a classical computer. These algorithmic descriptions and representations are the means used by those skilled in the data processing arts to most effectively convey the substance of their work to others skilled in the art. These operations, while described functionally or logically, are understood to be implemented by computer programs. Furthermore, the reference to these arrangements of operations in terms of modules should not be considered to imply a structural limitation and references to functional names is by way of illustration and does not infer a loss of generality.

Unless specifically stated otherwise as apparent from the description, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of one or more algorithms. It should be understood that the process steps, instructions, of the said method/system as described and/or claimed, may be executed by computer hardware operating under program control, and not mental steps performed by a human. Similarly, all of the types of data described and claimed may be stored in a computer readable storage medium operated by a computer system and are not simply disembodied abstract ideas.

The method/system also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer-readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions. Any one or more, or any combination of, the computer-readable storage media may each be coupled to a computer system bus. Furthermore, the computers referred to in the specification may include a single processor or may be architectures employing multiple processor designs, for example for increased computing capability.

Any controller(s) referred to herein may take any suitable form. For instance, the controller(s) may comprise processing circuitry, optionally including the one or more processors, and/or the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described herein. The computer program instructions may arrive at the apparatus via an electromagnetic carrier signal or be copied from a physical entity such as a computer program product, a non-volatile electronic memory device (e.g. flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

**Claims**

1. A method of determining a pulse sequence to apply an approximation of a local rotation in a first basis of a three-basis coordinate system to a particle of a plurality of particles in a quantum computer, wherein a set of particles having one or more particles of the plurality of particles is associated with a corresponding qubit of a plurality of qubits, the method comprising:
   identifying

   a first global rotation in a second basis of the three-basis coordinate system to apply to the plurality of particles, the second basis being different to the first basis;
   a local rotation in a third basis of the three-basis coordinate system to apply to the particle, the third basis being different from each of the first and second bases;
   a second global rotation in the second basis to apply to the plurality of particles;

   whereby the ordered combination of the first global rotation, the local rotation and the second global rotation approximate the local rotation in the first basis.

2. A method as claimed in claim 1, in which the phase of the second global rotation is opposite to the phase of the first global rotation.

3. A method as claimed in claim 1 or claim 2, in which the first global rotation is an R($\pi$/2) rotation, the location rotation in the third basis is an R($\theta$) rotation and the second global rotation is an R(-$\pi$/2) rotation.

4. A method as claimed in any preceding claim, in which identifying the local rotation in the third basis comprises

   determining a Hamiltonian describing a time evolution of the plurality of particles in dependence on a Rabi frequency, $\Omega$, a detuning frequency, $\delta$, and qubit interactions;
   setting $\Omega$ to zero to remove the kinetic term of the Hamiltonian;
   selecting an evolution time to reduce the influence of an interaction term describing the qubit interactions;
   selecting $\delta(\theta)$ to tune the Hamiltonian to act as a local rotation in the third basis with an angle of $\theta$.

5. A method as claimed in claim 4, in which determining the Hamiltonian comprises determining the interaction term to be

$$J \sum_i \hat{n}_i \, \hat{n}_{i+1}$$

   where $J = \dfrac{C_6}{r^6}$, with $C_6$ being a constant defined by the Rydberg state and $r$ a qubit separation, and the evolution time, $t$, is selected as $t = 2\pi/J$.

6. A method as claimed in claim 4 or claim 5, in which selecting $\delta(\theta)$ comprises selecting $\delta_i = \dfrac{\theta_i}{t}$, whereby the Hamiltonian can be tuned to act as a local gate in the third basis, with an angle of $\theta_i$.

7. A method as claimed in any preceding claim, in which identifying the local rotation in the third basis comprises

   determining a local rotation pulse length to maximise a fidelity of the local rotation in the third basis, comprising modelling nearest-neighbour interactions between qubits; and
   varying the determined local rotation pulse length to increase the fidelity of the local rotation in the third basis.

8. A method as claimed in any preceding claim, in which identifying one or both of the first and second global rotations comprises

determining a global rotation pulse length to maximise a fidelity of the first global rotation and/or the second global rotation, comprising modelling nearest-neighbour interactions between qubits; and
varying the determined global rotation pulse length to increase the fidelity of the first global rotation and/or the second global rotation.

9. A method of determining a pulse sequence to apply an approximation of a global rotation to a plurality of particles in an analog quantum computer, wherein a set of particles having one or more particles of the plurality of particles is associated with a corresponding qubit of a plurality of qubits, the pulse sequence being **characterised by** a parameter, the method comprising:

(i) in an initial stage:

determining an initial value for the parameter over an initial time period of the pulse sequence;
the initial value being determined by an optimisation process carried out on the pulse sequence over the initial time period.

10. A method as claimed in claim 9, in which the optimisation process comprises performing an annealing process to find a global minimum of a function.

11. A method as claimed in claim 9 or claim 10, in which the method comprises:

A) (ii) in a first stage subsequent to the initial stage:

dividing the initial time period of the initial stage into a plurality of first stage time periods, and for each first stage time period of the plurality of first stage time periods:

assigning the initial value for the parameter to be a first value for the parameter for that first stage time period, and
varying the first value for the parameter to determine a varied value for the parameter for that first stage time period, thereby to optimise the parameter over that first stage time period,

wherein the respective first values for the parameter in each of the first stage time periods are allowed to vary independently; or

B) (ii) in a first stage subsequent to the initial stage:

multiplying the initial time period of the initial stage by a positive factor > 1 to generate a new time period for the pulse sequence longer than the initial time period of the pulse sequence;
dividing the new time period into a plurality of time period sections, and for each time period section of the plurality of time period sections:

assigning the initial value for the parameter to be a first value for the parameter for that time period section, and
varying the first value for the parameter to determine a varied value for the parameter for that time period section, thereby to optimise
the parameter over that time period section,

wherein the respective first values for the parameter in each of the time period sections are allowed to vary independently.

12. A method of determining a pulse sequence to apply a quantum processing operation to a particle of a plurality of particles in a quantum computer, wherein a set of particles having one or more particles of the plurality of particles is associated with a corresponding qubit of a plurality of qubits, the method comprising:

determining an approximation of a local rotation as claimed in any of claims 1 to 8;

determining an approximation of a global rotation as claimed in any of claims 9 to 11;
determining an approximation of one or more *CZ* gates to the plurality of particles, comprising:

determining a sequence of *CZ* gates in an analog pulse sequence;
determining an unwanted *CZ* gate to remove from the sequence of *CZ* gates;

removing the unwanted *CZ* gate by applying a refocussing algorithm; and
determining the pulse sequence to apply a quantum processing operation by combining at least one of each of the determined local rotation, the determined global rotation and the determined one or more *CZ* gates.

13. A method as claimed in claim 12, in which removing the unwanted *CZ* gate comprises determining a pulse in the pulse sequence relating to an interaction between a first qubit and a second qubit that corresponds to the unwanted *CZ* gate, and surrounding the determined pulse by one of *X* gates or *Y* gates acting on one of the first qubit and the second qubit.

14. A method as claimed in claim 13, comprising using single-qubit detuning to compensate for linear terms introduced by applying the one of *X* gates or *Y* gates.

15. A method as claimed in any preceding claim, in which the quantum computer comprises a neutral atom quantum computer.

EP 4 579 539 A1

Fig. 1

EP 4 579 539 A1

Fig. 2a

Fig. 2b

Fig. 3a  Fig. 3b  Fig. 3c

EP 4 579 539 A1

Fig. 4a

Fig. 4b

Fig. 5

Fig. 6a

Fig. 6b

Fig. 6c

Fig. 6d

Fig. 7a

Fig. 7b

Fig. 7c

Fig. 8

Fig. 9a

Fig. 9b

Fig. 9c

PBC

OBC

(a)

(b)

(c)

(d)

Fig. 10

Fig. 11

Fig. 12b

Fig. 12a

Fig. 13c

Fig. 13d

Fig. 13a

Fig. 13b

Fig 14

Europäisches
Patentamt

European
Patent Office

Office européen
des brevets

**EUROPEAN SEARCH REPORT**

**Application Number**

EP 23 30 7426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | T. M. GRAHAM ET AL.: "Multi-qubit entanglement and algorithms on a neutral-atom quantum computer", NATURE, vol. 604, no. 7906, 20 April 2022 (2022-04-20), pages 457-462, XP037802615, DOI: 10.1038/S41586-022-04603-6 [retrieved on 2022-04-20] | 1-3,7,8, 15 | INV. G06N10/40 G06N10/60 G06N10/20 |
| Y | * figure 1 * | 9-11 | |
| A | * section Methods, subsection Quantum gate set * | 4-6, 12-14 | |
| L | M. SAFFMAN ET AL.: "Symmetric Rydberg controlled-Z gates with adiabatic pulses", ARXIV.ORG, CORNELL UNIVERSITY LIBRARY, 201 OLIN LIBRARY CORNELL UNIVERSITY ITHACA, NY 14853, 5 June 2020 (2020-06-05), XP081681224, DOI: 10.1103/PHYSREVA.101.062309 * sections II and III * * This document completes the disclosure of D1-XP037802615 with respect to the calculations of Cz gate parameters. * | | |
| Y | DAOQUAN ZHU ET AL: "Quantum computing with superconducting circuits in the picosecond regime", ARXIV.ORG, CORNELL UNIVERSITY LIBRARY, 201 OLIN LIBRARY CORNELL UNIVERSITY ITHACA, NY 14853, 14 January 2021 (2021-01-14), XP081859767, * appendix A * | 9-11 | |
| Y | US 2022/284334 A1 (NAM YUNSEONG [US] ET AL) 8 September 2022 (2022-09-08) * paragraphs [0036] - [0043] * | 11 | |

TECHNICAL FIELDS SEARCHED (IPC)

G06N

-/--

The present search report has been drawn up for all claims

| Place of search | Date of completion of the search | Examiner |
|---|---|---|
| The Hague | 24 September 2024 | Millet, Guillaume |

EPO FORM 1503 03.82 (P04C01)

page 1 of 2

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIEVEN M K VANDERSYPEN ET AL: "NMR Techniques for Quantum Control and Computation", ARXIV.ORG, CORNELL UNIVERSITY LIBRARY, 201 OLIN LIBRARY CORNELL UNIVERSITY ITHACA, NY 14853, 10 April 2004 (2004-04-10), XP080151029, * sections III-A-4 and III-A-5 * ----- | 12-14 | |

TECHNICAL FIELDS
SEARCHED (IPC)

The present search report has been drawn up for all claims

| Place of search | Date of completion of the search | Examiner |
|---|---|---|
| The Hague | 24 September 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 23 30 7426

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

54

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-8(completely); 15(partially)

   A method of determining a pulse sequence to apply an approximation of a local rotation as in claim 1, know from D1, with as special technical features in claim 4, identifying the local rotation in the third basis comprises determining a Hamiltonian describing a time evolution of the plurality of particles in dependence on a Rabi frequency, Omega, a detuning frequency, delta, and qubit interactions; setting Omega to zero to remove the kinetic term of the Hamiltonian; selecting an evolution time to reduce the influence of an interaction term describing the qubit interactions; selecting delta(theta) to tune the Hamiltonian to act as a local rotation in the third basis with an angle of theta.

   - - -

2. claims: 9-14(completely); 15(partially)

   A method of determining a pulse sequence to apply an approximation of a global rotation as in claim 9, with as special technical features in claim 9, the initial value being determined by an optimisation process carried out on the pulse sequence over the initial time period.

   - - -

## ANNEX TO THE EUROPEAN SEARCH REPORT
## ON EUROPEAN PATENT APPLICATION NO.

EP 23 30 7426

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | Publication date | Patent family member(s) | | Publication date |
|---|---|---|---|---|
| US 2022284334 A1 | 08-09-2022 | CN | 113853620 A | 28-12-2021 |
| | | CN | 113874885 A | 31-12-2021 |
| | | CN | 113874886 A | 31-12-2021 |
| | | CN | 113874887 A | 31-12-2021 |
| | | EP | 3973472 A1 | 30-03-2022 |
| | | EP | 3973473 A1 | 30-03-2022 |
| | | EP | 3973474 A1 | 30-03-2022 |
| | | EP | 3973475 A1 | 30-03-2022 |
| | | JP | 7324869 B2 | 10-08-2023 |
| | | JP | 7324870 B2 | 10-08-2023 |
| | | JP | 7324872 B2 | 10-08-2023 |
| | | JP | 7324873 B2 | 10-08-2023 |
| | | JP | 2022532900 A | 20-07-2022 |
| | | JP | 2022533691 A | 25-07-2022 |
| | | JP | 2022533961 A | 27-07-2022 |
| | | JP | 2022538515 A | 05-09-2022 |
| | | US | 2020369517 A1 | 26-11-2020 |
| | | US | 2020372389 A1 | 26-11-2020 |
| | | US | 2020372391 A1 | 26-11-2020 |
| | | US | 2020372392 A1 | 26-11-2020 |
| | | US | 2022284334 A1 | 08-09-2022 |
| | | US | 2022284335 A1 | 08-09-2022 |
| | | US | 2023029117 A1 | 26-01-2023 |
| | | WO | 2020236230 A1 | 26-11-2020 |
| | | WO | 2020236231 A1 | 26-11-2020 |
| | | WO | 2020237054 A1 | 26-11-2020 |
| | | WO | 2020237056 A1 | 26-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SILVÉRIO HENRIQUE et al.** Pulser: An open-source package for the design of pulse sequences in programmable neutral-atom arrays. *Quantum*, 12 January 2022, 629
- **HAROLD J METCALF ; PETER VAN DER STRA-TEN**. Laser cooling and trapping of atoms. *JOSA B*, 2003, vol. 20 (5), 887-908

- **FLORENCE NOGRETTE ; HENNING LABUHN ; SYLVAIN DE LESELEUC ; THIERRY LAHAYE ; ANTOINE BROWAEYS**. Synthetic three-dimensional atomic structures assembled atom by atom. *Nature*, September 2018, vol. 561 (7721), 79-82